# EUROPEAN PATENT APPLICATION

(11) **EP 3 531 745 A1**
(43) Date of publication of application: **28.08.2019**
(21) Application number: 16921514.2
(22) Date of filing: 18.11.2016
(51) Int. Cl.: H04W 28/14

(54) **CACHE DATA ACQUISITION METHOD, RELATED DEVICE AND COMMUNICATION SYSTEM**

(71) Applicant: Huawei Technologies Co., Ltd., Longgang District Shenzhen, Guangdong 518129 (CN)
(72) Inventor: FAN, Huifang, Chongqing Sichuan 400030 (CN); PANG, Lingli, Shenzhen Guangdong 518129 (CN); ZHENG, Xiaoxiao, Shenzhen Guangdong 518129 (CN); JIA, Yunjian, Chongqing Sichuan 400030 (CN); HUANG, Min, Shenzhen Guangdong 518129 (CN)
(74) Representative: Isarpatent
(86) International application number: PCT/CN2016/106447
(87) International publication number: WO 2018/090336

(57) **Abstract**

Embodiments of the present invention provide a cached-data obtaining method, a related device, and a communications system. The method includes: receiving a request data packet sent by a user terminal, where the request data packet is used to request target data from a source server; determining, based on a first data cache list, whether information about the request data packet matches information in the first data cache list; and if yes, sending the target data to the user terminal. The present invention further provides another cached-data obtaining method. In the embodiments of the present invention, data of a source server is delivered to a cache device (for example, a base station, a local gateway, or a cache server) that is relatively close to a user, so that the user can directly obtain target data from the cache device. This avoids overheads on a backhaul link from a wireless network to a core network, thereby improving a response speed when a user terminal requests data, and improving user experience.

## Description

### TECHNICAL FIELD

The present invention relates to the field of wireless network technologies, and in particular, to a cached-data obtaining method, a related device, and a system.

### BACKGROUND

With wide application of intelligent terminals (such as a smartphone) and rapid development of Internet technologies, mobile data traffic explodes continuously. A large amount of data traffic imposes excessive pressure on an operator server and a network infrastructure, and easily causes problems such as network congestion, data redundancy transmission, and poor user experience. To resolve this problem, a cache technology has attracted great attention from academia and industry.

Currently, a relatively common cache manner is delivering content in a source server to a network edge by using a content delivery network (Content Delivery Network, CDN) deployed in a backbone network (English: Backbone Network); and redirecting a data request of a user to a serving node closest to the user, according to comprehensive information such as network traffic, a connection or load status of each node, a distance from each node to the user, and a response time of each node for the user, so that the user can obtain required data from the closest serving node, to relieve a network congestion status of the Internet, and improve a speed at which a website responds to a user visit.

However, the CDN is deployed only in the backbone network, to push data to an edge of the backbone network. This causes relatively high overheads on a link backhaul from a wireless network to a core network, and consequently a response speed is relatively slow when a user terminal requests cached data, and user experience is reduced.

### SUMMARY

This application aims to provide a cached-data obtaining method, to avoid overheads on a backhaul link from a wireless network to a core network, thereby improving a response speed when a user terminal requests data, and improving user experience.

According to a first aspect, an embodiment of the present invention provides a cached-data obtaining method, including: receiving, by a base station, a request data packet sent by a user terminal, where the request data packet is used to request target data from a source server; determining, by the base station based on a first data cache list, whether information about the request data packet matches information in the first data cache list; and when the information about the request data packet matches the information in the first data cache list, sending, by the base station to the user terminal, the target data stored in a cache device. It may be understood that the cache device may be a base station, a local gateway, a cache server connected to the base station by using a local gateway, or a cache server independently deployed in a mobile network.

In this technical solution, after receiving the request data packet sent by the user terminal (the request data packet is used by the user terminal to request the target data from the source server), the base station determines, based on the first data cache list, whether the information about the request data packet matches the information in the first data cache list; and if yes, sends, to the user terminal, the target data stored in the cache device. Data of a source server is delivered to a cache device (for example, a base station, a local gateway, or a cache server) that is relatively close to a user, so that the user can directly obtain target data from the cache device. This avoids overheads on a backhaul link from a wireless network to a core network, thereby improving a response speed when a user terminal requests data, and improving user experience.

With reference to the first aspect, in a first implementation of the first aspect, the base station may further obtain the first data cache list before the base station determines, based on the first data cache list, whether the information about the request data packet matches the information in the first data cache list, where the first data cache list includes at least one of a server address or a data identifier.

With reference to the first aspect, in a second implementation of the first aspect, an implementation in which the base station sends the target data to the user terminal may be: sending, by the base station, the target data to the user terminal by using a first bearer established by the base station with the cache device. It may be understood that, in this case, the cache device includes the local gateway, the cache server connected to the base station by using the local gateway, or the cache server independently deployed in the mobile network.

In this technical solution, the first bearer is created to bear data transmission between the base station and the cache device, to implement data transmission between the base station, the cache device, and the source server, so that a user can directly obtain the target data from the cache device. This can avoid redundant-data transmission, thereby relieving network congestion, shortening a response delay, and improving user experience.

With reference to the first aspect, in a third implementation of the first aspect, the method may further include: when the information about the request data packet does not match the information in the first data cache list, the base station may send the target data to the user terminal by using a second bearer established by the base station with the source server.

In this technical solution, the second bearer is created to bear data transmission between the base station and the source server, to implement data transmission between the base station, the cache device, and the source server, so that when no target data is cached in the cache device, a user can transmit data by using an original TCP (transmission control protocol) data transmission channel, to obtain the target data.

With reference to the first aspect, in a fourth implementation of the first aspect, before the base station sends the target data to the user terminal, the base station may further determine whether the target data is cached in the cache device; and send the target data to the user terminal when the target data is cached. It may be understood that the target data may be stored in the cache device (the base station, the local gateway, the cache server connected to the base station by using the local gateway, or the cache server independently deployed in the mobile network).

In this technical solution, data of a source server is delivered to a cache device (a base station, a local gateway, or a cache server) that is relatively closer to a user, so that the user can directly obtain target data from the cache device. This can avoid redundant-data transmission, thereby relieving network congestion, shortening a response delay, and improving user experience.

With reference to the first aspect, or the first to the fourth implementations of the first aspect, in a fifth implementation of the first aspect, an implementation in which the base station sends the target data to the user terminal may be: encapsulating, by the base station, the target data into a response data packet, where a source address of the response data packet is a destination address of the request data packet; and then sending the response data packet to the user terminal.

In this technical solution, the base station responds, in place of the source server, to the request for the target data of the request data packet. This avoids a case in which the user terminal cannot identify the data packet when the user terminal detects that the source address of the response data packet is inconsistent with the destination address of the request data packet.

With reference to the fourth implementation of the first aspect, in a sixth implementation of the first aspect, when the target data is not cached in the cache device (the base station, the local gateway, or the cache server), the base station may further send the request data packet to the source server, so that the source server sends the target data to the user terminal after the source server receives the request data packet.

In this technical solution, when the target data is not cached in the cache device (the base station, the local gateway, or the cache server), a TCP (transmission control protocol) data transmission channel between the user terminal and the source server is still used to transmit data, to provide a TCP link processing manner.

With reference to the sixth implementation of the first aspect, in a seventh implementation of the first aspect, when the base station detects the target data sent by the source server to the user terminal, the base station may store the target data in the cache device (the base station, the local gateway, or the cache server), so that the cache device stores the target data that can be cached, to avoid a repeated request for the target data, and relieve network congestion.

With reference to the fourth implementation of the first aspect, in an eighth implementation of the first aspect, when the target data is not cached, the base station may further generate a first request data packet, where a source address of the first request data packet is an address of the cache device, and the first request data packet is used to request the target data from the source server; and then send the first request data packet to the source server, so that the source server sends the target data to the cache device after receiving the first request data packet.

In this technical solution, when the target data is not cached in the cache device (the base station, the local gateway, or the cache server), a TCP (transmission control protocol) data transmission channel between the base station and the source server is used to transmit data, to provide a TCP link processing manner to obtain the target data.

With reference to the fourth implementation of the first aspect, in a ninth implementation of the first aspect, when the target data is not cached in the cache device (the local gateway or the cache server), the base station may receive a signaling message sent by the cache device; generate a second request data packet based on the signaling message, where the second request data packet is used to request the target data from the source server; and then send the second request data packet to the source server, so that the source server returns the target data after receiving the second request data packet. Further, the base station receives the target data returned by the source server, and sends the target data to the user terminal.

In this technical solution, when the target data is not cached in the cache device (the local gateway or the cache server), a TCP (transmission control protocol) data transmission channel between the base station and the source server is used to transmit data, to provide a TCP link processing manner to obtain the target data.

With reference to the ninth implementation of the first aspect, in a tenth implementation of the first aspect, after the base station receives the target data returned by the source server, the base station may further store the target data in the cache device (the local gateway or the cache server), so that the cache device stores the target data that can be cached, to avoid a repeated request for the target data, and relieve network congestion.

With reference to the fourth implementation of the first aspect, in an eleventh implementation of the first aspect, an implementation in which the base station determines whether the target data is cached may be: determining, by the base station, whether the target data is cached in the cache device, where the cache device is a local gateway, a cache server connected to the base station by using a local gateway, or a cache server independently deployed in a mobile network. Correspondingly, when the target data is cached in the cache device, an implementation in which the base station sends the target data to the user terminal may be: sending, by the base station, a data request to the cache device, so that the cache device sends the target data to the user terminal after receiving the data request.

With reference to the first aspect, in a twelfth implementation of the first aspect, the method may further include: sending, by the base station, an address of the cache device to the user terminal.

According to a second aspect, an embodiment of the present invention further provides a cached-data obtaining method, including: receiving, by a cache device, a request data packet sent by a user terminal, where the request data packet is sent by the user terminal to a base station and is used to request target data, and the base station sends the request data packet to the cache device when the base station receives the request data packet, and when the base station determines that information about the request data packet matches information in a first data cache list or that a destination address of the request data packet is an address of the cache device; and in this case, the cache device receives the request data packet, and sends the target data to the user terminal. It may be understood that the cache device may be a base station, a local gateway, a cache server connected to the base station by using a local gateway, or a cache server independently deployed in a mobile network.

In this technical solution, the cache device receives the request data packet sent by the user terminal. The request data packet is sent by the user terminal to the base station and is used to request the target data. The base station sends the request data packet to the cache device when the base station receives the request data packet, and when the base station determines that the information about the request data packet matches the information in the first data cache list or that the destination address of the request data packet is the address of the cache device. In this case, the cache device sends the target data to the user terminal. Data of a source server is delivered to a cache device (a base station, a local gateway, a cache server connected to a base station by using a local gateway, or a cache server independently deployed in a mobile network) that is deployed in the mobile network and that is relatively close to a user, so that the user can directly obtain target data from the cache device. This avoids overheads on a backhaul link from a wireless network to a core network, thereby improving a response speed when a user terminal requests data, and improving user experience.

With reference to the second aspect, in a first implementation of the second aspect, an implementation in which the cache device sends the target data to the user terminal may be: determining, by the cache device, whether the target data is cached; and sending the target data to the user terminal when the target data is cached.

With reference to the second aspect or the first implementation of the second aspect, in a second implementation of the second aspect, an implementation in which the cache device sends the target data to the user terminal may be: encapsulating, by the cache device, the target data into a response data packet, where a source address of the response data packet is the destination address of the request data packet; and then sending the response data packet to the user terminal.

In this technical solution, the cache device responds, in place of a source server, to the request for the target data of the request data packet. This avoids a case in which the user terminal cannot identify the data packet when the user terminal detects that the source address of the response data packet is inconsistent with the destination address of the request data packet; and avoids redundant-data transmission, thereby relieving network congestion, shortening a response delay, and improving user experience.

With reference to the first implementation of the second aspect, in a third implementation of the second aspect, when the base station determines that the information about the request data packet matches the information in the first data cache list and that the target data is not cached in the cache device (a local gateway, a cache server connected to the base station by using a local gateway, or a cache server independently deployed in a mobile network), the method may further include: sending, by the cache device, the request data packet to a source server, so that the source server sends the target data to the user terminal after the source server receives the request data packet.

In this technical solution, when the target data is not cached in the cache device, a TCP (transmission control protocol) data transmission channel between the user terminal and the source server is still used to transmit data, to provide a TCP link processing manner to obtain the target data.

With reference to the first implementation of the second aspect, in a fourth implementation of the second aspect, when the target data is not cached in the cache device (a base station, a local gateway, a cache server connected to the base station by using a local gateway, or a cache server independently deployed in a mobile network), the method further includes: sending, by the cache device, a first request data packet to the source server, so that the source server returns the target data after the source server receives the first request data packet, where the first request data packet is used to request the target data from the source server; and then receiving, by the cache device, the target data returned by the source server, and sending the target data to the user terminal.

In this technical solution, when the target data is not cached in the cache device (the base station, the local gateway, the cache server connected to the base station by using the local gateway, or the cache server independently deployed in the mobile network), a TCP (transmission control protocol) data transmission channel between the cache device and the source server is used to transmit data, to provide a TCP link processing manner to obtain the target data.

With reference to the first implementation of the second aspect, in a fifth implementation of the second aspect, when the target data is not cached in the cache device (a local gateway, a cache server connected to the base station by using a local gateway, or a cache server independently deployed in a mobile network), the method further includes: sending, by the cache device, a signaling message to the base station, so that the base station sends a second request data packet to a source server after the base station receives the signaling message, where the second request data packet is used to request the target data from the source server; and then the base station receives the target data returned by the source server, and sends the target data to the user terminal.

In this technical solution, when the target data is not cached in the cache device (the local gateway, the cache server connected to the base station by using the local gateway, or the cache server independently deployed in the mobile network), a TCP (transmission control protocol) data transmission channel between the base station and the source server is used to transmit data, to provide a TCP link processing manner to obtain the target data.

According to a third aspect, an embodiment of the present invention further provides a cached-data obtaining method, including: generating, by a user terminal, a third request data packet, where the third request data packet is used to request target data from a source server; determining, based on a second data cache list, whether information about the third request data packet matches information in the second data cache list; if yes, generating a fourth request data packet, where the second data cache list includes at least one piece of information and a correspondence between the information and an address of a cache device, a destination address of the fourth request data packet is an address of a cache device corresponding to matched information, and the fourth request data packet is used to request the target data from the cache device; sending, by the user terminal, the fourth request data packet to the cache device, so that the cache device sends the target data to the user terminal after receiving the fourth request data packet; and receiving, by the user terminal, the target data. It may be understood that the cache device may be a base station, a local gateway, a cache server connected to the base station by using a local gateway, or a cache server independently deployed in a mobile network.

In this technical solution, the second data cache list is set in the user terminal. The second data cache list includes the at least one piece of information and the correspondence between the information and the address of the cache device. After the user terminal receives the third request data packet used to request the target data from the source server, the user terminal determines, based on the second data cache list, whether the information about the third request data packet matches the information in the second data cache list. If yes, it indicates that the target data is data that can be cached in the cache device. Therefore, the user terminal modifies a destination address of the third request data packet to the address of the cache device corresponding to the matched information, to generate the fourth request data packet used to request the target data from the cache device, and then sends the fourth request data packet to the cache device, so that the cache device sends the target data to the user terminal after receiving the fourth request data packet. In this case, the user terminal receives the target data. In this way, target data is obtained from a cache device (for example, a base station, a local gateway, or a cache server) that is relatively close to a user, to avoid overheads on a backhaul link from a wireless network to a core network, thereby improving a response speed when a user terminal requests data, and improving user experience.

With reference to the third aspect, in a first implementation of the third aspect, when the information about the third request data packet does not match the information in the second data cache list, the target data is data that cannot be cached in the cache device. Therefore, the user terminal may send the third request data packet, so that the source server sends the target data of the third request data packet to the user terminal after receiving the third request data packet. In this case, the user terminal receives the target data.

In this technical solution, a TCP (Transmission Control Protocol) data transmission channel between the user terminal and the source server is used to transmit data, to provide a TCP link processing manner to obtain the target data.

With reference to the third aspect, in a first implementation of the third aspect, before the determining, by the user terminal, whether information about the third request data packet matches information in the second data cache list, the method further includes: obtaining, by the user terminal, the second data cache list, where the second data cache list includes the at least one piece of information and the correspondence between the information and the address of the cache device, and the information includes a server address and/or a data identifier.

According to a fourth aspect, the present invention provides a base station, including:
a receiving module, configured to receive a request data packet sent by a user terminal, where the request data packet is used to request target data from a source server;
a processing module, configured to determine, based on a pre-stored first data cache list, whether information about the request data packet matches information in the first data cache list; and
a sending module, configured to send the target data to the user terminal when the information about the request data packet matches the information in the first data cache list.

In this technical solution, after receiving the request data packet sent by the user terminal (the request data packet is used by the user terminal to request the target data from the source server), the base station determines, based on the first data cache list, whether the information about the request data packet matches the information in the first data cache list; and if yes, sends, to the user terminal, the target data stored in a cache device. Data of a source server is delivered to a cache device (for example, a base station, a local gateway, or a cache server) that is relatively close to a user, so that the user can directly obtain target data from the cache device. This avoids overheads on a backhaul link from a wireless network to a core network, thereby improving a response speed when a user terminal requests data, and improving user experience.

With reference to the fourth aspect, in a first implementation of the fourth aspect,
the processing module is further configured to obtain the first data cache list, where the first data cache list includes at least one piece of the following information:
a server address or a data identifier.

With reference to the fourth aspect, in a second implementation of the fourth aspect, the sending module is further configured to:
when the information about the request data packet matches the information in the first data cache list, send the target data to the user terminal by using a first bearer established by the base station with a cache device.

With reference to the fourth aspect, in a third implementation of the fourth aspect, the sending module is further configured to:
when the information about the request data packet does not match the information in the first data cache list, send the target data to the user terminal by using a second bearer established by the base station with the source server.

With reference to the fourth aspect, in a fourth implementation of the fourth aspect,
the processing module is further configured to: determine whether the target data is cached; and when the target data is cached, trigger the sending module to send the target data to the user terminal.

With reference to any one of the fourth aspect, or the first to the fourth implementations of the fourth aspect, in a fifth implementation of the fourth aspect,
the processing module is further configured to encapsulate the target data into a response data packet, where a source address of the response data packet is a destination address of the request data packet; and
the sending module is further configured to send the response data packet to the user terminal.

With reference to the fourth implementation of the fourth aspect, in a sixth implementation of the fourth aspect, the sending module is further configured to send the request data packet to the source server when the target data is not cached, so that the source server sends the target data to the user terminal after the source server receives the request data packet.

With reference to the fourth implementation of the fourth aspect, in a seventh implementation of the fourth aspect,
the processing module is further configured to generate a first request data packet when the target data is not cached, where a source address of the first request data packet is an address of a cache device, and the first request data packet is used to request the target data from the source server; and
the sending module is further configured to send the first request data packet to the source server, so that the source server sends the target data to the cache device after receiving the first request data packet.

With reference to the fourth implementation of the fourth aspect, in an eighth implementation of the fourth aspect,
the receiving module is further configured to: when the target data is not cached, receive a signaling message sent by the cache device;
the processing module is further configured to generate a second request data packet based on the signaling message, where the second request data packet is used to request the target data from the source server;
the sending module is further configured to send the second request data packet to the source server, so that the source server returns the target data after receiving the second request data packet;
the receiving module is further configured to receive the target data returned by the source server; and
the sending module is further configured to send the target data to the user terminal.

With reference to the fourth implementation of the fourth aspect, in a ninth implementation of the fourth aspect,
the processing module is further configured to determine whether the cache device includes the target data, where the cache device is a local gateway, the cache server connected to the base station by using the local gateway, or a cache server independently deployed in a mobile network; and
the sending module is further configured to send a data request to the cache device when the target data is cached in the cache device, so that the cache device sends the target data to the user terminal after receiving the data request.

With reference to the fourth aspect, in a tenth implementation of the fourth aspect, the sending module is further configured to send an address of a cache device to the user terminal.

According to a fifth aspect, an embodiment of the present invention further provides a cache device, including:
a receiving module, configured to receive a request data packet sent by a user terminal, where the request data packet is sent by the user terminal to a base station and is used to request target data, and the base station sends the request data packet to the cache device when the base station receives the request data packet, and when the base station determines that information about the request data packet matches information in a first data cache list or that a destination address of the request data packet is an address of the cache device; and
a sending module, configured to send the target data to the user terminal.

In this technical solution, the cache device receives the request data packet sent by the user terminal. The request data packet is sent by the user terminal to the base station and is used to request the target data. The base station sends the request data packet to the cache device when the base station receives the request data packet, and when the base station determines that the information about the request data packet matches the information in the first data cache list or that the destination address of the request data packet is the address of the cache device. In this case, the cache device sends the target data to the user terminal. Data of a source server is delivered to a cache device (a base station, a local gateway, a cache server connected to a base station by using a local gateway, or a cache server independently deployed in a mobile network) that is deployed in the mobile network and that is relatively close to a user, so that the user can directly obtain target data from the cache device. This avoids overheads on a backhaul link from a wireless network to a core network, thereby improving a response speed when a user terminal requests data, and improving user experience.

With reference to the fifth aspect, in a first implementation of the fifth aspect, the cache device further includes a processing module, configured to: determine whether the target data is cached; and when the target data is cached, trigger the sending module to send the target data to the user terminal.

With reference to the fifth aspect or the first implementation of the fifth aspect, in a second implementation of the fifth aspect,
the processing module is further configured to encapsulate the target data into a response data packet, where a source address of the response data packet is the destination address of the request data packet; and
the sending module is further configured to send the response data packet to the user terminal.

With reference to the first implementation of the fifth aspect, in a third implementation of the fifth aspect, the sending module is further configured to send the request data packet to the source server when the base station determines that the information about the request data packet matches the information in the first data cache list and that the target data is not cached, so that the source server sends the target data to the user terminal after the source server receives the request data packet.

With reference to the first implementation of the fifth aspect, in a fourth implementation of the fifth aspect,
the sending module is further configured to send a first request data packet to the source server when the target data is not cached, so that the source server returns the target data after the source server receives the first request data packet, where the first request data packet is used to request the target data from the source server;
the receiving module is further configured to receive the target data returned by the source server; and
the sending module is further configured to send the target data to the user terminal.

With reference to the first implementation of the fifth aspect, in a fifth implementation of the fifth aspect, the sending module is further configured to send a signaling message to the base station when the target data is not cached, so that the base station sends a second request data packet to the source server after the base station receives the signaling message, where the second request data packet is used by the base station to request the target data from the source server; and the base station receives the target data returned by the source server, and sends the target data to the user terminal.

According to a sixth aspect, an embodiment of the present invention further provides a user terminal, including:
a processing module, configured to: generate a third request data packet, where the third request data packet is used to request target data from a source server; and determine, based on a second data cache list, whether information about the third request data packet matches information in the second data cache list, where the second data cache list includes at least one piece of information and a correspondence between the information and an address of a cache device, where
the processing module is further configured to generate a fourth request data packet when the information about the third request data packet matches the information in the second data cache list, where a destination address of the fourth request data packet is an address of a cache device corresponding to matched information, and the fourth request data packet is used to request the target data from the cache device;
a sending module, configured to send the fourth request data packet to the cache device, so that the cache device sends the target data to the user terminal after receiving the fourth request data packet; and
a receiving module, configured to receive the target data.

In this technical solution, the second data cache list is set in the user terminal. The second data cache list includes the at least one piece of information and the correspondence between the information and the address of the cache device. After the user terminal receives the third request data packet used to request the target data from the source server, the user terminal determines, based on the second data cache list, whether the information about the third request data packet matches the information in the second data cache list. If yes, it indicates that the target data is data that can be cached in the cache device. Therefore, the user terminal modifies a destination address of the third request data packet to the address of the cache device corresponding to the matched information, to generate the fourth request data packet used to request the target data from the cache device, and then sends the fourth request data packet to the cache device, so that the cache device sends the target data to the user terminal after receiving the fourth request data packet. In this case, the user terminal receives the target data. In this way, target data is obtained from a cache device (for example, a base station, a local gateway, or a cache server) that is relatively close to a user, to avoid overheads on a backhaul link from a wireless network to a core network, thereby improving a response speed when a user terminal requests data, and improving user experience.

With reference to the sixth aspect, in a first implementation of the sixth aspect,
the sending module is further configured to send the third request data packet when the information about the third request data packet does not match the information in the second data cache list, so that the source server sends the target data to the user terminal after receiving the third request data packet; and
the receiving module is further configured to receive the target data.

With reference to the sixth aspect, in a second implementation of the sixth aspect, the processing module is further configured to:
obtain the second data cache list, where the second data cache list includes the at least one piece of information and the correspondence between the information and the address of the cache device, and the information includes a server address and/or a data identifier.

According to a seventh aspect, an embodiment of the present invention further provides a base station, including:
a receiver, configured to receive a request data packet sent by a user terminal, where the request data packet is used to request target data from a source server;
a processor, configured to determine, based on a pre-stored first data cache list, whether information about the request data packet matches information in the first data cache list; and
a transmitter, configured to send the target data to the user terminal when the information about the request data packet matches the information in the first data cache list.

With reference to the seventh aspect, in a first implementation of the seventh aspect, the processor is further configured to obtain the first data cache list, where the first data cache list includes at least one piece of the following information:
a server address or a data identifier.

With reference to the seventh aspect, in a second implementation of the seventh aspect, the transmitter is further configured to:
when the information about the request data packet matches the information in the first data cache list, send the target data to the user terminal by using a first bearer established by the base station with a cache device.

With reference to the seventh aspect, in a third implementation of the seventh aspect, the transmitter is further configured to:
when the information about the request data packet does not match the information in the first data cache list, send the target data to the user terminal by using a second bearer established by the base station with the source server.

With reference to the seventh aspect, in a fourth implementation of the seventh aspect, the processor is further configured to: determine whether the target data is cached; and when the target data is cached, trigger the transmitter to send the target data to the user terminal.

With reference to any one of the seventh aspect, or the first to the fourth implementations of the seventh aspect, in a fifth implementation of the seventh aspect, the processor is further configured to encapsulate the target data into a response data packet, where a source address of the response data packet is a destination address of the request data packet; and
the transmitter is further configured to send the response data packet to the user terminal.

With reference to the fourth implementation of the seventh aspect, in a sixth implementation of the seventh aspect, the transmitter is further configured to send the request data packet to the source server when the target data is not cached, so that the source server sends the target data to the user terminal after the source server receives the request data packet.

With reference to the fourth implementation of the seventh aspect, in a seventh implementation of the seventh aspect, the processor is further configured to generate a first request data packet when the target data is not cached, where a source address of the first request data packet is an address of a cache device, and the first request data packet is used to request the target data from the source server; and
the transmitter is further configured to send the first request data packet to the source server, so that the source server sends the target data to the cache device after receiving the first request data packet.

With reference to the fourth implementation of the seventh aspect, in an eighth implementation of the seventh aspect, the receiver is further configured to: when the target data is not cached, receive a signaling message sent by the cache device;
the processor is further configured to generate a second request data packet based on the signaling message, where the second request data packet is used to request the target data from the source server;
the transmitter is further configured to send the second request data packet to the source server, so that the source server returns the target data after receiving the second request data packet;
the receiver is further configured to receive the target data returned by the source server; and
the transmitter is further configured to send the target data to the user terminal.

With reference to the fourth implementation of the seventh aspect, in a ninth implementation of the seventh aspect, the processor is further configured to determine whether the cache device includes the target data, where the cache device is a local gateway, the cache server connected to the base station by using the local gateway, or a cache server independently deployed in a mobile network; and
the transmitter is further configured to send a data request to the cache device when the target data is cached in the cache device, so that the cache device sends the target data to the user terminal after receiving the data request.

With reference to the seventh aspect, in a tenth implementation of the seventh aspect, the transmitter is further configured to send an address of a cache device to the user terminal.

According to an eighth aspect, an embodiment of the present invention further provides a cache device, including:
a receiver, configured to receive a request data packet sent by a user terminal, where the request data packet is sent by the user terminal to a base station and is used to request target data, and the base station sends the request data packet to the cache device when the base station receives the request data packet, and when the base station determines that information about the request data packet matches information in a first data cache list or that a destination address of the request data packet is an address of the cache device; and
a transmitter, configured to send the target data to the user terminal.

With reference to the eighth aspect, in a first implementation of the eighth aspect, the cache device further includes:
a processor, configured to: determine whether the target data is cached; and when the target data is cached, trigger the transmitter to send the target data to the user terminal.

With reference to the eighth aspect or the first implementation of the eighth aspect, in a second implementation of the eighth aspect, the processor is further configured to encapsulate the target data into a response data packet, where a source address of the response data packet is the destination address of the request data packet; and
the transmitter is further configured to send the response data packet to the user terminal.

With reference to the first implementation of the eighth aspect, in a third implementation of the eighth aspect, the transmitter is further configured to:
send the request data packet to the source server when the base station determines that the information about the request data packet matches the information in the first data cache list and that the target data is not cached, so that the source server sends the target data to the user terminal after the source server receives the request data packet.

With reference to the first implementation of the eighth aspect, in a fourth implementation of the eighth aspect, the transmitter is further configured to send a first request data packet to the source server when the target data is not cached, so that the source server returns the target data after the source server receives the first request data packet, where the first request data packet is used to request the target data from the source server;
the receiver is further configured to receive the target data returned by the source server; and
the transmitter is further configured to send the target data to the user terminal.

With reference to the first implementation of the eighth aspect, in a fifth implementation of the eighth aspect, the transmitter is further configured to send a signaling message to the base station when the target data is not cached, so that the base station sends a second request data packet to the source server after the base station receives the signaling message, where the second request data packet is used by the base station to request the target data from the source server; and the base station receives the target data returned by the source server, and sends the target data to the user terminal.

According to a ninth aspect, an embodiment of the present invention further provides a user terminal, including:
a processor, configured to: generate a third request data packet, where the third request data packet is used to request target data from a source server; and determine, based on a second data cache list, whether information about the third request data packet matches information in the second data cache list, where the second data cache list includes at least one piece of information and a correspondence between the information and an address of a cache device, where
the processor is further configured to generate a fourth request data packet when the information about the third request data packet matches the information in the second data cache list, where a destination address of the fourth request data packet is an address of a cache device corresponding to matched information, and the fourth request data packet is used to request the target data from the cache device;
a transmitter, configured to send the fourth request data packet to the cache device, so that the cache device sends the target data to the user terminal after receiving the fourth request data packet; and
a receiver, configured to receive the target data.

With reference to the ninth aspect, in a first implementation of the ninth aspect, the transmitter is further configured to send the third request data packet when the information about the third request data packet does not match the information in the second data cache list, so that the source server sends the target data to the user terminal after receiving the third request data packet; and
the receiver is further configured to receive the target data.

With reference to the ninth aspect, in a second implementation of the ninth aspect, the processor is further configured to:
obtain the second data cache list, where the second data cache list includes the at least one piece of information and the correspondence between the information and the address of the cache device, and the information includes a server address and/or a data identifier.

According to a tenth aspect, an embodiment of the present invention further provides a base station, including a processor, a memory, and a communications interface. The processor is connected to the memory and the communications interface. For example, the processor may be connected to the memory and the communications interface by using a bus. The communications interface is configured to communicate with a device such as a user terminal or a cache device (a local gateway, a cache server connected to the base station by using a local gateway, or a cache server independently deployed in a mobile network). The memory is configured to store program code, the target data, the second data cache list, and the like of the cached-data obtaining method according to the first aspect. The processor is configured to invoke the program code in the memory to perform some or all of the procedures in the first aspect.

According to an eleventh aspect, an embodiment of the present invention further provides a cache device, including a processor, a memory, and a communications interface. The processor is connected to the memory and the communications interface. For example, the processor may be connected to the memory and the communications interface by using a bus. The communications interface is configured to communicate with a device such as a user terminal or a source server. The memory is configured to store program code and the target data of the cached-data obtaining method according to the second aspect. The processor is configured to invoke the program code in the memory to perform some or all of the procedures in the second aspect. The cache device may be a base station, a local gateway, a cache server connected to a base station by using a local gateway, or a cache server independently deployed in a mobile network.

According to a twelfth aspect, an embodiment of the present invention further provides a user terminal, including a processor, a memory, and a communications interface. The processor is connected to the memory and the communications interface. For example, the processor may be connected to the memory and the communications interface by using a bus. The communications interface is configured to communicate with a device such as a cache device or a source server. The memory is configured to store program code and the second data cache list of the cached-data obtaining method according to the third aspect. The processor is configured to invoke the program code in the memory to perform some or all of the procedures in the third aspect. The cache device may be a base station, a local gateway, a cache server connected to a base station by using a local gateway, or a cache server independently deployed in a mobile network.

According to a thirteenth aspect, an embodiment of the present invention further provides a communications system, including a user terminal, a base station, and a cache device, where
the user terminal is configured to send a request data packet, where the request data packet is used to request target data from a source server;
the base station is configured to: receive the request data packet sent by the user terminal; determine, based on a first data cache list, whether information about the request data packet matches information in the first data cache list; and if yes, send the target data to the user terminal; and
the cache device is configured to store the target data.

Optionally, the base station includes any base station according to the fourth aspect, the seventh aspect, or the tenth aspect, and the cache device includes any cache device according to the fifth aspect, the eighth aspect, or the eleventh aspect.

According to a fourteenth aspect, an embodiment of the present invention further provides a communications system, including a user terminal and a cache device.
the user terminal is configured to: generate a third request data packet, where the third request data packet is used to request target data from a source server; determine, based on a second data cache list, whether information about the third request data packet matches information in the second data cache list; if yes, generate a fourth request data packet, where the second data cache list includes at least one piece of information and a correspondence between the information and an address of a cache device, a destination address of the fourth request data packet is an address of a cache device corresponding to matched information, and the fourth request data packet is used to request the target data from the cache device; and send the fourth request data packet to the cache device;
the cache device is configured to: receive the fourth request data packet, and send the target data to the user terminal; and
the user terminal is further configured to receive the target data.

Optionally, the user terminal includes any user terminal according to the sixth aspect, the ninth aspect, or the twelfth aspect; and the cache device includes any cache device according to the fifth aspect, the first to the second implementations of the fifth aspect, the fourth implementation of the fifth aspect, the fifth implementation of the fifth aspect, the eighth aspect, the first to the second implementations of the eighth aspect, the fourth implementation of the eighth aspect, the fifth implementation of the eighth aspect, the eleventh aspect, the first to the second implementations of the eleventh aspect, the fourth implementation of the eleventh aspect, or the fifth implementation of the eleventh aspect.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may further derive other accompanying drawings from these accompanying drawings without creative efforts.
FIG. 1 is a schematic architectural diagram of a communications system according to an embodiment of the present invention;
FIG. 2 is a schematic flowchart of a cached-data obtaining method according to an embodiment of the present invention;
FIG. 3 is a schematic flowchart of a first manner in which a base station sends target data to a user terminal according to the present invention;
FIG. 4A and FIG. 4B are a schematic flowchart of a second manner in which a base station sends target data to a user terminal according to the present invention;
FIG. 5 is another schematic flowchart of a cached-data obtaining method according to an embodiment of the present invention;
FIG. 6 is a schematic structural diagram of a base station according to an embodiment of the present invention;
FIG. 7 is a schematic structural diagram of another base station according to an embodiment of the present invention;
FIG. 8 is a schematic structural diagram of a cache device according to an embodiment of the present invention;
FIG. 9 is a schematic structural diagram of another cache device according to an embodiment of the present invention;
FIG. 10 is a schematic structural diagram of a user terminal according to an embodiment of the present invention;
FIG. 11 is a schematic structural diagram of another user terminal according to an embodiment of the present invention;
FIG. 12 is a schematic structural diagram of still another base station according to an embodiment of the present invention;
FIG. 13 is a schematic structural diagram of still another cache device according to an embodiment of the present invention; and
FIG. 14 is a schematic structural diagram of still another user terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

A cached-data obtaining method described in the following embodiments may be applied to various communications systems, such as a Global System for Mobile Communications (GSM, Global System for Mobile Communications), a Code Division Multiple Access (CDMA, Code Division Multiple Access) system, a Wideband Code Division Multiple Access (WCDMA, Wideband Code Division Multiple Access) system, a general packet radio service (GPRS, General Packet Radio Service) system, and a Long Term Evolution (LTE, Long Term Evolution) system. A user terminal may be a terminal that has a communication function, such as a smartphone (English: smartphone) or a tablet computer (English: tablet computer). This is not limited in the present invention.

A base station may be a base transceiver station (BTS, Base Transceiver Station) in the GSM or CDMA, may be a NodeB (NodeB) in WCDMA or an evolved NodeB (eNB or eNodeB, evolved NodeB) in LTE, or may be a network device (for example, a controller) in a future communications system such as 5G. This is not limited in the present invention.

The user terminal (UE, User Equipment) specifically includes a device that can access a network by using a base station, such as a mobile phone (English: cellphone), a smartphone (English: smartphone), a computer (English: computer), a tablet computer (English: tablet computer), a mobile Internet device (English: mobile Internet device, MID), or a wearable device.

A cache device (Cache device) is a component or a device that has a data cache function, and is configured to store data of a source server. The cache device is a base station, a local gateway (English: Local Gateway, LGW), a cache server connected to a base station by using a local gateway, a cache server independently deployed in a mobile network, or the like. For a specific case, refer to related descriptions of the following embodiments.

The source server (English: Over The Top server, also referred to as OTT Server) may be a third-party server (Over The Top Server) that provides an application service for a user terminal by using the Internet, or may be a content provider server (Content provider server) of an operator, or the like. The source server is configured to publish target data in the embodiments of the present invention, and may also be configured to set a first data cache list in the base station according to the embodiments of the present invention or a second data cache list in the user terminal according to the embodiments of the present invention.

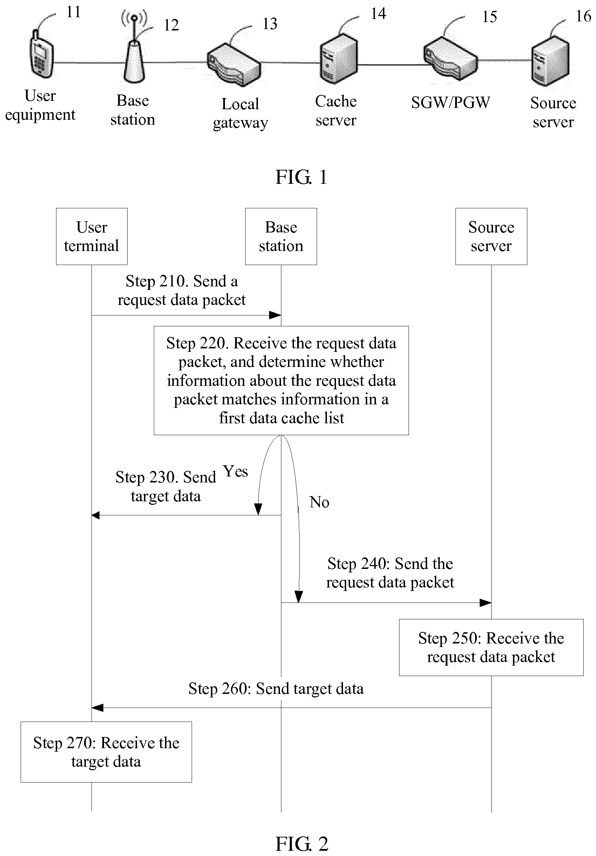

FIG. 1 is a schematic architectural diagram of a communications system according to an embodiment of the present invention. The embodiments of the present invention may be implemented based on the communications system. The communications system includes a user terminal 11, a base station 12, and a cache device. The cache device in the present invention may be the base station 12, a local gateway 13, a cache server 14 connected to the base station 12 by using the local gateway 13, or a cache server 14 independently deployed in a mobile network. For a specific case, refer to related descriptions of the following embodiments. The system may further include a PDN gateway (English: Public Data Network Gateway, also referred to as PDN Gateway, PGW for short) 15 or a serving gateway (English: Serving Gateway, SGW) 15, a source server 16, and the like. Although FIG. 1 depicts one user terminal 11, one base station 12, one local gateway 13, one PGW/SGW 15, and one source server 16, the communications system may include different quantities of user terminals 11, base stations 12, local gateways 13, cache servers 14, PGWs/SGWs 15, and source servers 16.

The base station 11 may establish two bearers: an S1 bearer, namely, a first bearer; and an S2 bearer, namely, a second bearer. An object of the S1 bearer is the LGW, and the S1 bearer is used to bear data transmission between the user terminal 11 and the local gateway 13 or the cache server 14. An object of the S2 bearer is the SGW/PGW 15, and the S2 bearer is used to bear data transmission between the user terminal 11 and the source server 16. The base station 11 creates two radio bearers and respectively binds the two radio bearers to the S1 bearer and the S2 bearer, to implement a one-to-one correspondence between the two radio bearers and the S1 bearer and the S2 bearer.

FIG. 2 is a schematic flowchart of a cached-data obtaining method according to an embodiment of the present invention. The cached-data obtaining method includes the following steps.

Step S210: A user terminal sends a request data packet, where the request data packet is used to request target data from a source server.

Specifically, the user terminal may send an uplink data packet to the source server by using an application program, for example, a browser, video software, or music software, to request to obtain the target data. The request data packet may include a source address, a destination address, and an identifier of the target data. The source address is an address of the user terminal, for example, an IP address (English: Internet Protocol Address) of the user terminal or a MAC (English: Media Access Control or Medium Access Control) address of the user terminal. The destination address is an address and a port number of the source server, and the address of the source server may be an IP address of the source server or a MAC address of the source server. The identifier of the target data may be a uniform resource locator (English: Uniform Resource Locator, URL) of the target data. For example, the data packet is an HTTP Get request, and the user terminal requests to obtain the target data, for example, a first movie, from the source server, for example, a first video website.

Step S220: A base station receives the request data packet sent by the user terminal, and determines, based on a first data cache list, whether information about the request data packet matches information in the first data cache list.

The base station configures the first data cache list, and the first data cache list at least includes at least one piece of the following information: a server address or a data identifier. The server address is used to indicate address information of a source server from which data that can be cached in the base station comes, and may be a server IP address and a server port number. For example, if the first data cache list includes an IP address and a port number of a first video website, a cache device (for example, a base station, a local gateway, or a cache server) can cache data of the first video website. The server address may be alternatively a server MAC address and a server port number. The server IP address may also be replaced with information that can be corresponding to the server IP address or the server MAC address, such as a server name or a server domain name. Optionally, the information may further include the data identifier, for example, a URL. The data identifier is used to indicate the data in the source server that can be cached in the base station. For example, if the first data cache list includes an IP address of a first video website, and a URL of a first video, a URL of a second video, and a URL of a third video at the IP address of the first video website, the cache device can cache the first video, the second video, and the third video of the first video website, but cannot cache a fourth video of the first video website. It may be understood that the first data cache list may be actively pushed by the source server to the base station, or may be requested by the base station from the source server. This is not limited in the present invention.

It may be understood that the first data cache list may be configured by the source server, or may be configured by an operator by using an HPLMN (Home Public Land Mobile Network). Alternatively, the base station may cache, in a cache device in the base station based on a quantity of data request times, a plurality of pieces of data that meet a cache condition. In this case, the first data cache list may include source server addresses of the plurality of pieces of data that meet the cache condition and/or URLs of the plurality of pieces of data that meet the cache condition. It may be set that data that is requested more than a preset quantity of times, for example, more than 100 times, meets the cache condition.

Specifically, after receiving the request data packet sent by the user terminal, the base station parses the request data packet, and determines, based on the first data cache list, whether the destination address of the request data packet matches address information in the first data cache list. If yes, the information about the request data packet matches the information in the first data cache list. For example, when the first data cache list includes the server address and the server port number, the base station may determine whether a server address and a server port number that are consistent with or corresponding to the destination address (to be specific, the address and the port number of the source server) of the request data packet exists in the first data cache list. It may be understood that a server MAC address is corresponding to a unique server IP address. If yes, the destination address of the request data packet matches the address information in the first data cache list. Otherwise, the destination address of the request data packet does not match the address information in the first data cache list. For another example, when the first data cache list includes the server domain name and the server port number, the base station may determine whether a server domain name and a server port number that are corresponding to the destination address (to be specific, the address and the port number of the source server) of the request data packet exists in the first data cache list. If yes, the destination address of the request data packet matches the address information in the first data cache list. Otherwise, the destination address of the request data packet does not match the address information in the first data cache list. When the first data cache list includes the server address and the data identifier, step S220 further includes: determining, by the base station, whether a data identifier consistent with the identifier of the target data exists in the first data cache list. When the destination address of the request data packet matches the address information in the first data cache list, and the data identifier consistent with the identifier of the target data exists in the first data cache list, the information of the request data packet matches the information in the first data cache list. When the information about the request data packet matches the information in the first data cache list, it indicates that the cache device can cache the target data. In this case, the base station may perform step S230. Otherwise, it indicates that the cache device cannot cache the target data. In this case, the base station may perform step S240: The base station sends the request data packet to the source server, so that the source server sends the target data to the user terminal after receiving the request data packet. It may be understood that the cache device may be a base station, a local gateway, a cache server connected to the base station by using a local gateway, a cache server independently deployed in a mobile network, or the like.

Step S230: The base station sends the target data to the user terminal.

Specifically, the base station sends, to the user terminal, the target data stored in the cache device. The cache device may be the base station, or may be the local gateway, the cache server connected to the base station by using the local gateway, the cache server independently deployed in the mobile network, or the like.

In a first possible implementation of step S230, the cache device is the base station, and the base station may have a stored-data list. The stored-data list may include an identifier of at least one piece of stored data, for example, a URL of the data. For example, the stored-data list includes a URL of a first movie and a URL of a second movie.

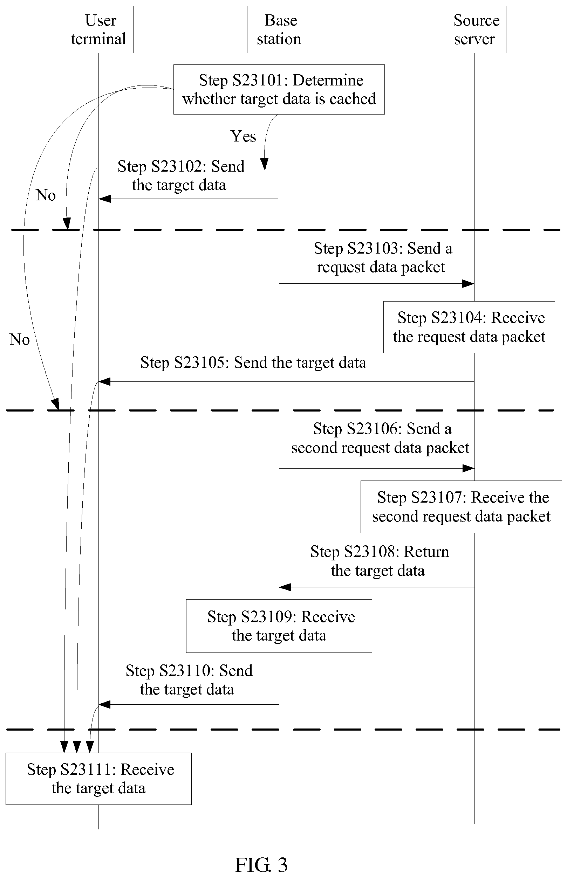

FIG. 3 is a schematic flowchart of a first manner in which a base station sends target data to a user terminal according to the present invention. The first possible implementation of step S230 may specifically include the following steps.

Step S23101: The base station determines whether the target data is cached.

For example, after receiving the request data packet, the base station parses out the URL that is of the target data and that is included in the request data packet, and determines whether the stored-data list includes the URL of the target data. If yes, it indicates that the target data is cached in the base station, and therefore step S23102 may be performed. Otherwise, it indicates that the target data is not cached in the base station, and therefore step S23103 to step S23105 may be performed, or perform step S23106 to step S23109.

Step S23102: The base station sends the target data to the user terminal.

Optionally, an implementation of step S23102 may include: encapsulating, by the base station, the target data into a response data packet, where a source address of the response data packet is the destination address of the request data packet; and then sending the response data packet to the user terminal.

Step S23105 to step S23110 in FIG. 3 show a first implementation in which the base station sends the target data to the user terminal when the target data is not cached according to this embodiment of the present invention. The first implementation includes the following steps.

Step S23103: The base station sends the request data packet to the source server.

Specifically, when the target data is not cached in the cache device (the base station, the local gateway, or the cache server), step S23103 may be performed.

Step S23104: The source server receives the request data packet.

Step S23105: The source server sends the target data to the user terminal.

Optionally, step S23105 may further include the following step: When the base station detects the target data sent by the source server to the user terminal, the base station may store the target data in the cache device.

Optionally, a second implementation in which the base station sends the target data to the user terminal when the target data is not cached includes the following steps: The base station generates a first request data packet, where a source address of the first request data packet is an address of the cache device (for example, an IP address of the cache device or a MAC address of the cache device), a destination address of the first request data packet is the address of the source server (for example, the IP address of the source server or the MAC address of the source server), and the first request data packet is used to request the target data from the source server; and then the base station sends the first request data packet to the source server. The source server sends the target data to the cache device after receiving the first request data packet, and then the cache device sends the target data to the user terminal.

Step S23106 to step S23110 in FIG. 3 show a third implementation in which the base station sends the target data to the user terminal when the target data is not cached according to this embodiment of the present invention. The third implementation includes the following steps.

Step S23106: The base station sends a second request data packet to the source server, where the second request data packet is used by the base station to request the target data from the source server, a source address of the second request data packet is an address of the base station, and a destination address of the second request data packet is an address of the source server.

Specifically, when the target data is not cached in the cache device (the base station), step S23106 may be performed. The source address of the second request data packet is the address of the base station (for example, a MAC address of the base station or an IP address of the base station), the destination address of the second request data packet is the destination address of the request data packet, and the second request data packet includes the identifier of the target data.

Step S23107: The source server receives the second request data packet.

Step S23108: The source server returns the target data to the base station.

Step S23109: The base station receives the target data returned by the source server.

Step S23110: The base station sends the target data to the user terminal.

Optionally, after step S23110, the base station may further store the target data.

Step S23111: The user terminal receives the target data.

Specifically, after step S23102, step S23105, or step S23110, the user terminal may receive the target data.

In a second possible implementation of step S230, the cache device may be the local gateway, the cache server connected to the base station by using the local gateway, or the cache server independently deployed in the mobile network, and a stored-data list may be set in the cache device (the cache server or the local gateway). The stored-data list may include an identifier of at least one piece of cached data, for example, a URL of the data. For example, the stored-data list includes a URL of a first movie and a URL of a second movie.

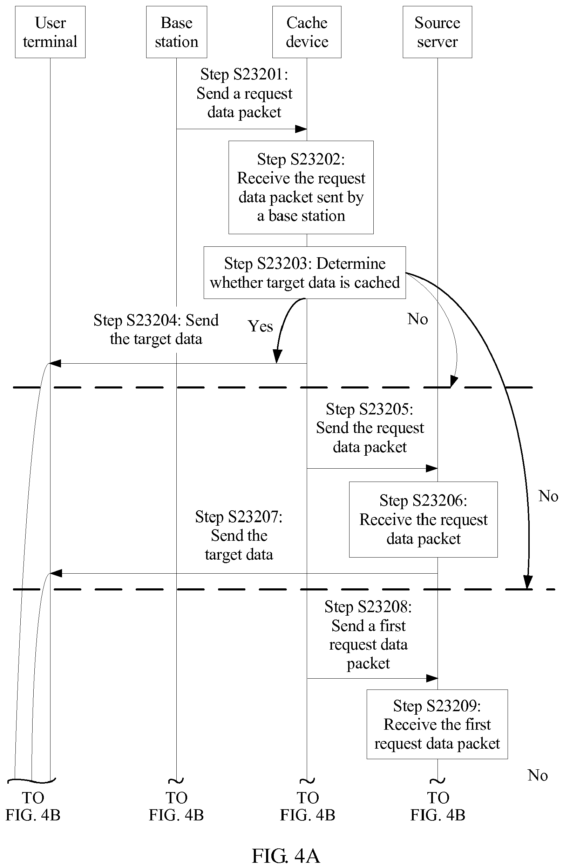

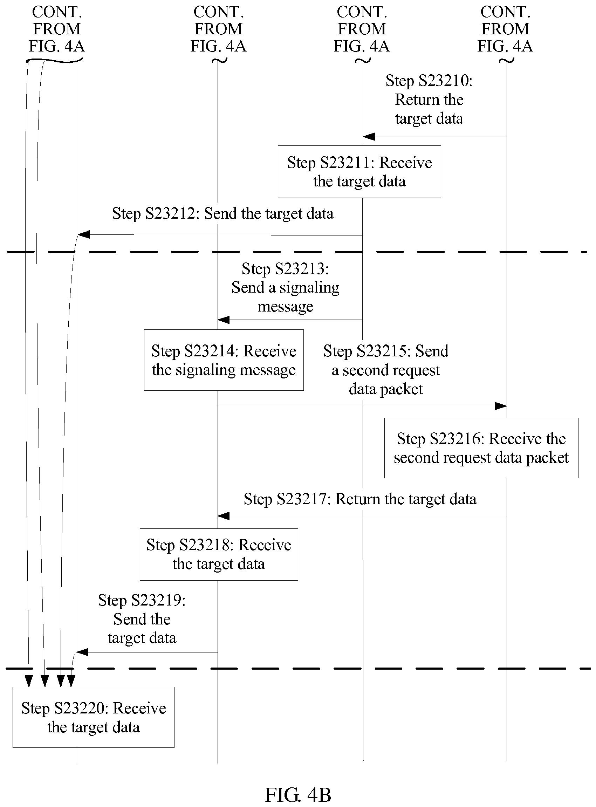

FIG. 4A and FIG. 4B are a schematic flowchart of a second manner in which a base station sends target data to a user terminal according to the present invention. The second possible implementation of step S230 may specifically include the following steps.

Step S23201: The base station sends the request data packet to a cache device.

Specifically, the base station may establish a first bearer with the cache device in advance, to carry data transmission between the user terminal and the cache device; and establish a second bearer with the source server in advance, to carry data transmission between the user terminal and the source server. The first bearer established by the base station with the cache device may be controlled by the local gateway or the base station, or may be controlled by a mobility management device (English: Mobility Management Entity, MME) deployed in the mobile network.

Step S23202: The cache device receives the request data packet sent by the base station.

Step S23203: The cache device determines whether the target data is cached.

Specifically, the cache device may determine whether the stored-data list includes the identifier of the target data. If yes, the cache device determines that the target data is cached, and therefore may perform step S23204. Otherwise, step S23205 to step S23207, step S23208 to step S23212, or step S23213 to step S23219 are performed.

Step S23204: The cache device sends the target data to the user terminal.

Optionally, step S23204 may include: encapsulating, by the cache device, the target data into a response data packet, where a source address of the response data packet is the destination address of the request data packet; and then sending the response data packet to the user terminal.

Step S23205 to step S23207 in FIG. 4A show a fourth implementation in which the base station sends the target data to the user terminal when the target data is not cached according to this embodiment of the present invention. The fourth implementation includes the following steps.

Step S23205: The cache device sends the request data packet to the source server.

Specifically, when the stored-data list of the cache device does not include the identifier of the target data, step S23205 may be performed.

Step S23206: The source server receives the request data packet.

Step S23207: The source server sends the target data to the user terminal.

Optionally, step S23207 may further include the following steps: When the base station detects the target data sent by the source server to the user terminal, the base station may send the target data to the cache device. The cache device may receive and store the target data, and send the target data to the user terminal.

Step S23208 to step S23212 in FIG. 4A and FIG. 4B show a fifth implementation in which the base station sends the target data to the user terminal when the target data is not cached according to this embodiment of the present invention. The fifth implementation includes the following steps.

Step S23208: The cache device sends a first request data packet to the source server, where the first request data packet is used to request the target data from the source server.

Specifically, when the stored-data list of the cache device (the base station, the local gateway, the cache server connected to the base station by using the local gateway, or the cache server independently deployed in the mobile network) does not include the identifier of the target data, step S23208 may be performed. A source address of the first request data packet is an address of the cache device (for example, a MAC address of the cache device or an IP address of the cache device), a destination address of the first request data packet is the destination address of the request data packet, and the first request data packet includes the identifier of the target data.

Step S23209: The source server receives the first request data packet.

Step S23210: The source server sends the target data to the cache device.

Step S23211: The cache device receives the target data sent by the source server.

Step S23212: The cache device sends the target data to the user terminal.

Optionally, after step S23210, the cache device may further store the target data.

Step S23213 to step S23219 in FIG. 4B show a sixth implementation in which the base station sends the target data to the user terminal when the target data is not cached according to this embodiment of the present invention. The sixth implementation includes the following steps.

Step S23213: The cache device sends a signaling message to the base station.

The cache device (for example, the local gateway, the cache server connected to the base station by using the local gateway, or the cache server independently deployed in the mobile network) may generate the signaling message based on the data packet. The signaling message is used to instruct the base station to: request the target data from the source server, and send the target data to the user terminal after the base station receives the target data. The signaling message includes the address of the user terminal (for example, the MAC address of the user terminal or the IP address of the user terminal), the identifier of the target data, and the destination address of the request data packet.

Step S23214: The base station receives the signaling message.

Step S23215: The base station sends a second request data packet to the source server, where the second request data packet is used to request the target data from the source server.

The base station may generate the second request data packet based on the signaling message. A source address of the second request data packet is an address of the base station (for example, a MAC address of the base station or an IP address of the base station), and a destination address of the second request data packet is the destination address of the request data packet, to be specific, the address of the source server. The second request data packet includes the identifier of the target data.

Step S23216: The source server receives the second request data packet.

Step S23217: The source server sends the target data to the base station.

Step S23218: The base station receives the target data returned by the source server.

Step S23219: The base station sends the target data to the user terminal.

Optionally, step S23219 may further include the following steps: When the base station detects the target data sent by the source server to the user terminal, the base station may send the target data to the cache device. The cache device may store the target data.

Step S23220: The user terminal receives the target data.

Specifically, after step S23204, step S23207, step S23212, or step S23219, step S23220 may be further performed.

Step S240: The base station sends the request data packet to the source server.

Specifically, when the determining result of step S220 is yes, to be specific, the destination address of the request data packet does not match the address information in the first data cache list, it indicates that the target data is data that cannot be cached in the cache device, and therefore step S240 to step S260 may be performed.

Step S250: The source server receives the request data packet.

Step S260: The source server sends the target data to the user terminal.

Step S270: The user terminal receives the target data.

In this embodiment of the present invention, after receiving the request data packet sent by the user terminal (the request data packet is used by the user terminal to request the target data from the source server), the base station determines, based on the first data cache list, whether the information about the request data packet matches the information in the first data cache list; and if yes, sends, to the user terminal, the target data stored in the cache device. Data of a source server is delivered to a cache device (for example, a base station, a local gateway, or a cache server) that is relatively close to a user, so that the user can directly obtain target data from the cache device. This avoids overheads on a backhaul link from a wireless network to a core network, thereby improving a response speed when a user terminal requests data, and improving user experience.

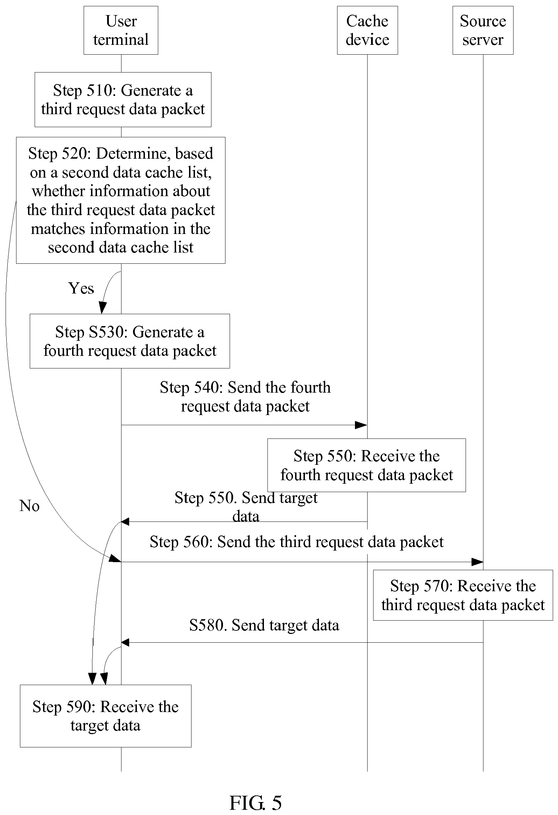

FIG. 5 is another schematic flowchart of a cached-data obtaining method according to an embodiment of the present invention. The cached-data obtaining method includes the following steps.

Step S510: A user terminal generates a third request data packet, where the third request data packet is used to request target data from a source server.

Specifically, the user terminal may send an uplink data packet, namely, the third request data packet, to the source server by using an application program, for example, a browser, video software, or music software, to request to obtain the target data. Generation of the third request data packet may be triggered by the user terminal after the user terminal detects a data obtaining operation for an identifier or a link of the target data in the application program, or may be triggered by the application program when the application program detects that data needs to be updated or in another case. The data obtaining operation may be a tap operation, a double-tap operation, a drag operation, or the like for the identifier or the link of the target data. The third request data packet includes a source address, a destination address, and the identifier of the target data. The source address is an address of the user terminal, for example, an IP address or a MAC address of the user terminal. The destination address is an address of the source server, for example, an IP address of the source server. The identifier of the target data may be a URL of the target data. For example, the third request data packet is an HTTP Get request, and the user terminal requests to obtain the target data, for example, a first movie, from the source server, for example, a first video website.

Step S520: The user terminal determines, based on a second data cache list, whether information about the third request data packet matches information in the second data cache list.

The user terminal may configure or obtain the second data cache list. The second data cache list includes at least one piece of information and a correspondence between the information and an address of a cache device, and the information includes a server address and/or a data identifier. The address of the cache device may be an IP address and a port number of the cache device, or may be a MAC address and a port number of the cache device. The server address may be an IP address and a port number of a source server, may be a server MAC address and a server port number, or may be a server name, a server domain name, or the like and a server port number that are corresponding to the IP address of the source server or the server MAC address. The server address is used to indicate a source server from which data that can be cached in the base station comes. For example, if the second data cache list includes an IP address of a first video website, the base station can cache data of the first video website. Optionally, the information may further include a data URL. The data URL is used to indicate the data in the source server that can be cached in the base station. For example, if the second data cache list includes an IP address of a first video website, and a URL of a first video, a URL of a first video, and a URL of a third video at the IP address of the first video website, the base station can cache the first video, the first video, and the third video of the first video website, but cannot cache a fourth video of the first video website. The address and the port number of the cache device are used to indicate address information of the cache device, to implement a TCP communication connection between the user terminal and the cache device. There is the correspondence between the information included in the second data cache list and the address of the cache device. For example, an IP address of a first video website is corresponding to an IP address and a port number of a first cache device, and an IP address of a second video website is corresponding to an IP address and a port number of a second cache device. It may be understood that a plurality of pieces of information may be corresponding to an address of a same cache device. The second data cache list is provided by an OTT service provider, the address and the port number of the cache device are provided by an operator, and the address of the cache device may be broadcasted to the user terminal by using the base station.

Specifically, the user terminal determines, based on the second data cache list, whether the destination address of the third request data packet matches address information in the second data cache list. If yes, the information about the third request data packet matches the information in the second data cache list. For example, when the second data cache list includes the server address and the server port number, the user terminal may determine whether a server address and a server port number that are consistent with or corresponding to the destination address (to be specific, the address and a port number of the source server) of the third request data packet exists in the second data cache list. It may be understood that a server MAC address is corresponding to a unique server IP address. If yes, the destination address of the third request data packet matches the address information in the second data cache list. Otherwise, the destination address of the third request data packet does not match the address information in the second data cache list. For another example, when the second data cache list includes the server domain name and the server port number, the user terminal may determine whether a server domain name and a server port number that are corresponding to the destination address (to be specific, the address and a port number of the source server) of the third request data packet exists in the second data cache list. If yes, the destination address of the request data packet matches the address information in the first data cache list. Otherwise, the destination address of the request data packet does not match the address information in the first data cache list. When the second data cache list includes the server address and the data identifier, step S520 further includes: determining, by the user terminal, whether a data identifier consistent with the identifier of the target data exists in the second data cache list. When the destination address of the third request data packet matches the address information in the first data cache list, and the data identifier consistent with the identifier of the target data exists in the second data cache list, the information of the third request data packet matches the information in the first data cache list. When the information about the third request data packet matches the information in the second data cache list, it indicates that the target data is data that can be cached in the cache device, and therefore step S530 may be performed, to obtain the target data from the cache device. Otherwise, it indicates that the target data is not data that can be cached in the cache device, and therefore step S560 to step S590 may be performed.

Optionally, before step S520, the user terminal may obtain the second data cache list. The second data cache list includes the at least one piece of information and the correspondence between the information and the address of the cache device, and the information includes the server address and/or the data identifier.

It may be understood that the cache device may be a local gateway, a cache server connected to the base station by using a local gateway, or a cache server independently deployed in a mobile network. It may be understood that the cache device in this embodiment of the present invention may be replaced with the base station, the local gateway, or the cache server.

Step S530: The user terminal generates a fourth request data packet, where a destination address of the fourth request data packet is an address of a cache device corresponding to matched information, and the fourth request data packet is used to request the target data from the cache device.

Specifically, the user terminal may search, based on the correspondence between the information and the address of the cache device in the second data cache list, for the address of the cache device corresponding to the information (for example, a server address) that matches the destination address of the third request data packet, and then modify the destination address of the third request data packet to the address of the cache device corresponding to the matched server address, to generate the fourth request data packet. A source address of the fourth request data packet is the address of the user terminal, and the destination address of the fourth request data packet is the address of the cache device corresponding to the matched information. The fourth request data packet includes the identifier of the target data, and is used to request the target data from the cache device.

Step S540: The user terminal sends the fourth request data packet to the cache device.

Specifically, the user terminal sends the fourth request data packet to the cache device corresponding to the matched information.

Step S550: The cache device receives the fourth request data packet, and sends the target data to the user terminal.

Specifically, the cache device (for example, the base station, the local gateway, or the cache server) may configure a stored-data list. The stored-data list may include an identifier of at least one piece of stored data, for example, a URL of the data. For example, the stored-data list includes a URL of a first movie and a URL of a second movie. After receiving the fourth request data packet, the cache device parses out request content in the fourth request data packet, to be specific, the identifier of the target data, and sends the target data corresponding to the identifier of the target data to the user terminal.

Optionally, the cache device may determine whether the stored-data list includes the target data. If yes, it indicates that the target data is cached in the cache device, and therefore the cache device sends, to the user terminal in response to the fourth request data packet, the target data that is stored in the cache device and that is corresponding to the identifier of the target data. Otherwise, it indicates that the target data is not cached in the cache device, and therefore the cache device may request to obtain the target data from the source server.

Optionally, an implementation in which the cache device may request to obtain the target data from the source server may be as follows: The cache device sends a first request data packet to the source server, where the first request data packet is used to request the target data from the source server, a destination address of the first request data packet is the address of the source server, and a source address of the first request data packet is the address of the cache device (for example, a MAC address or an IP address of the cache device). The source server receives the first request data packet, and returns the target data to the cache device in response to the first request data packet. The cache device receives the target data, and sends the target data to the user terminal. Optionally, the cache device may further store the target data and a correspondence between the identifier of the target data and the target data. It may be understood that the cache device may be the base station, the local gateway, or the cache server.

Optionally, when the cache device is the local gateway or the cache server, another implementation in which the cache device may request to obtain the target data from the source server may be as follows: The cache device may send a signaling message to the base station, where the signaling message is used to instruct the base station to: request the target data from the source server, and send the target data to the user terminal or the cache device after the base station receives the target data. The base station receives the signaling message, generates a second request data packet based on the signaling message, and sends the second request data packet to the source server, where the second request data packet is used to request the target data from the source server. The source server receives the second request data packet, and sends the target data to the base station in response to the second request data packet. The base station receives the target data returned by the source server, and sends the target data to the user terminal or the cache device. After the cache device receives the target data, the cache device may store the target data and the correspondence between the identifier of the target data and the target data, and send the target data to the user terminal.

It should be noted that the third request data packet may carry the address of the source server of the target data, so that the cache device can obtain the destination address of the third request data packet, to be specific, the address of the source server, and generate the first request data packet and the signaling message. The signaling message may carry the address of the source server of the target data and the identifier of the target data, so that the base station can obtain the destination address of the second request data packet, and generate the second request data packet. Alternatively, the cache device may send a source address request to the user terminal, to request to obtain the address of the source server of the target data. This is not limited in the present invention.

Step S560: The user terminal sends the third request data packet.

Specifically, when a determining result of step S520 is no, to be specific, when the server address in the second data cache list does not include the destination address of the third request data packet, the user terminal may send the third request data packet to the source server.

Step S570: The source server receives the third request data packet.

Step S580: The source server sends the target data.

Specifically, after receiving the third request data packet sent by the user terminal, the source server sends the target data to the user terminal in response to the third request data packet.

Step S590: The user terminal receives the target data.

In the embodiment shown in FIG. 5, the second data cache list is set in the user terminal. The second data cache list includes the at least one piece of information and the correspondence between the information and the address of the cache device. After the user terminal receives the third request data packet used to request the target data from the source server, the user terminal determines, based on the second data cache list, whether the information about the third request data packet matches the information in the second data cache list. If yes, it indicates that the target data is data that can be cached in the cache device. Therefore, the user terminal modifies the destination address of the third request data packet to the address of the cache device corresponding to the matched information, to generate the fourth request data packet used to request the target data from the cache device, and then sends the fourth request data packet to the cache device, so that the cache device sends the target data to the user terminal after receiving the fourth request data packet. In this case, the user terminal receives the target data. In this way, target data is obtained from a cache device (for example, a base station, a local gateway, or a cache server) that is relatively close to a user, to avoid overheads on a backhaul link from a wireless network to a core network, thereby improving a response speed when a user terminal requests data, and improving user experience.

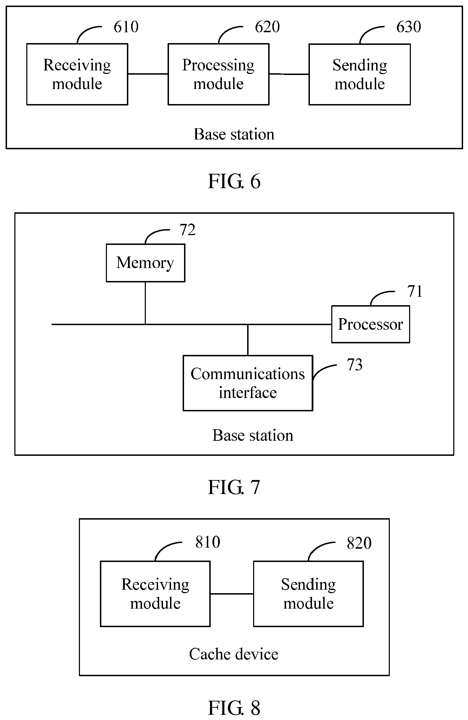

FIG. 6 is a schematic structural diagram of a base station according to an embodiment of the present invention. As shown in FIG. 6, the base station includes:
a receiving module 610, configured to receive a request data packet sent by a user terminal, where the request data packet is used to request target data from a source server;
a processing module 620, configured to determine, based on a pre-stored first data cache list, whether information about the request data packet matches information in the first data cache list; and
a sending module 630, configured to send the target data to the user terminal when the information about the request data packet matches the information in the first data cache list.

Optionally, the processing module 620 is further configured to obtain the first data cache list, where the first data cache list includes at least one piece of the following information:
a server address or a data identifier.

Optionally, the sending module 630 is further configured to: when the information about the request data packet matches the information in the first data cache list, send the target data to the user terminal by using a first bearer established by the base station with a cache device.

Optionally, the sending module 630 is further configured to: when the information about the request data packet does not match the information in the first data cache list, send the target data to the user terminal by using a second bearer established by the base station with the source server.

Optionally, the processing module 620 is further configured to: determine whether the target data is cached; and when the target data is cached, trigger the sending module to send the target data to the user terminal.

Optionally, the processing module 620 is further configured to encapsulate the target data into a response data packet, where a source address of the response data packet is a destination address of the request data packet; and
the sending module 630 is further configured to send the response data packet to the user terminal.

The sending module 630 is further configured to send the request data packet to the source server when the target data is not cached, so that the source server sends the target data to the user terminal after the source server receives the request data packet.

Optionally, the processing module 620 is further configured to generate a first request data packet when the target data is not cached, where a source address of the first request data packet is an address of a cache device, and the first request data packet is used to request the target data from the source server; and
the sending module 630 is further configured to send the first request data packet to the source server, so that the source server sends the target data to the cache device after receiving the first request data packet.

Optionally, the receiving module 610 is further configured to: when the target data is not cached, receive a signaling message sent by the cache device;
the processing module 620 is further configured to generate a second request data packet based on the signaling message, where the second request data packet is used to request the target data from the source server;
the sending module 630 is further configured to send the second request data packet to the source server, so that the source server returns the target data after receiving the second request data packet;
the receiving module 610 is further configured to receive the target data returned by the source server; and
the sending module 630 is further configured to send the target data to the user terminal.

Optionally, the processing module 620 is further configured to determine whether the cache device includes the target data, where the cache device is a local gateway, the cache server connected to the base station by using the local gateway, or a cache server independently deployed in a mobile network; and
the sending module 630 is further configured to send a data request to the cache device when the target data is cached in the cache device, so that the cache device sends the target data to the user terminal after receiving the data request.

Optionally, the sending module 630 is further configured to send an address of a cache device to the user terminal.

It should be noted that functions of the modules in the base station in the embodiments of the present invention may be specifically implemented according to the method in the method embodiment shown in FIG. 2. For a specific implementation process of the functions, refer to related descriptions of the method embodiment shown in FIG. 2. Details are not described herein again.

In the embodiment shown in FIG. 6, after receiving the request data packet sent by the user terminal (the request data packet is used by the user terminal to request the target data from the source server), the base station determines, based on the first data cache list, whether the information about the request data packet matches the information in the first data cache list; and if yes, sends, to the user terminal, the target data stored in the cache device. Data of a source server is delivered to a cache device (for example, a base station, a local gateway, or a cache server) that is relatively close to a user, so that the user can directly obtain target data from the cache device. This avoids overheads on a backhaul link from a wireless network to a core network, thereby improving a response speed when a user terminal requests data, and improving user experience.

FIG. 7 is a schematic structural diagram of another base station according to an embodiment of the present invention. As shown in FIG. 7, the base station includes a processor 71, a memory 72, and a communications interface 73. The processor 71 is connected to the memory 72 and the communications interface 73. For example, the processor 71 may be connected to the memory 72 and the communications interface 73 by using a bus.

The processor 71 is configured to support the base station in performing a corresponding function in the cached-data obtaining method shown in FIG. 2. The processor 71 may be a central processing unit (English: central processing unit, CPU), a network processor (English: network processor, NP), a hardware chip, or any combination thereof. The hardware chip may be an application-specific integrated circuit (English: application-specific integrated circuit, ASIC), a programmable logic device (English: programmable logic device, PLD), or a combination thereof. The PLD may be a complex programmable logic device (English: complex programmable logic device, CPLD), a field programmable gate array (English: field programmable gate array, FPGA), generic array logic (English: generic array logic, GAL), or any combination thereof.

The memory 72 is configured to store the target data, the first data cache list, program code, and the like of the cached-data obtaining method shown in FIG. 2. The memory 72 may include a volatile memory (English: volatile memory), for example, a random access memory (English: random access memory, RAM for short). The memory 72 may also include a nonvolatile memory (English: nonvolatile memory), for example, a read-only memory (English: read-only memory, ROM for short), a flash memory (English: flash memory), a hard disk (English: hard disk drive, HDD for short), or a solid-state drive (English: solid-state drive, SSD for short). The memory 72 may further include a combination of the foregoing types of memories.

The communications interface 73 is configured to communicate with a device such as a user terminal, a local gateway, a cache server, or a source server, to receive/send the message in the foregoing method.

The processor 71 may invoke the program code to perform the following operations:
receiving, by using the communications interface 73, a request data packet sent by a user terminal, where the request data packet is used to request target data from a source server;
determining, based on a first data cache list, whether information about the request data packet matches information in the first data cache list; and
when the information about the request data packet matches the information in the first data cache list, sending the target data to the user terminal by using the communications interface 73.

Optionally, before the processor 71 determines, based on the first data cache list, whether the information about the request data packet matches the information in the first data cache list, the processor 71 is further configured to:
obtain the first data cache list by using the communications interface 73, where the first data cache list includes at least one piece of the following information:
a server address or a data identifier.

Optionally, when the information about the request data packet matches the information in the first data cache list, the sending the target data to the user terminal by using the communications interface 73 includes: sending the target data to the user terminal by using the communications interface 73 and by using a first bearer established by the base station with a cache device.

Optionally, the processor 71 is further configured to: when the information about the request data packet does not match the information in the first data cache list, send the target data to the user terminal by using the communications interface 73 and by using a second bearer established by the base station with the source server.

Optionally, before the processor 71 sends the target data to the user terminal by using the communications interface 73, the processor 71 is further configured to:
determine whether the target data is cached; and
when the target data is cached, perform the step of sending the target data to the user terminal by using the communications interface 73.

Optionally, that the processor 71 sends the target data to the user terminal by using the communications interface 73 includes:
encapsulating the target data into a response data packet, where a source address of the response data packet is a destination address of the request data packet; and
sending the response data packet to the user terminal by using the communications interface 73.

Optionally, the processor 71 is further configured to: when the target data is not cached, send the request data packet to the source server by using the communications interface 73, so that the source server sends the target data to the user terminal after the source server receives the request data packet.

Optionally, the processor 71 is further configured to: generate a first request data packet when the target data is not cached, where a source address of the first request data packet is an address of a cache device, and the first request data packet is used to request the target data from the source server; and
send the first request data packet to the source server by using the communications interface 73, so that the source server sends the target data to the cache device after receiving the first request data packet.

Optionally, the processor 71 is further configured to: when the target data is not cached, receive, by using the communications interface 73, a signaling message sent by the cache device;
generate a second request data packet based on the signaling message, where the second request data packet is used to request the target data from the source server;
send the second request data packet to the source server by using the communications interface 73, so that the source server returns the target data after receiving the second request data packet; and
receive, by using the communications interface 73, the target data returned by the source server, and send the target data to the user terminal by using the communications interface 73.

Optionally, that the processor 71 determines whether the target data is cached includes:
determining whether the target data is cached in a cache device, where the cache device is a local gateway, a cache server connected to the base station by using a local gateway, or a cache server independently deployed in a mobile network.

When the target data is cached in the cache device, the sending the target data to the user terminal by using the communications interface 73 includes: sending a data request to the cache device by using the communications interface 73, so that the cache device sends the target data to the user terminal after receiving the data request.

Optionally, the processor 71 is further configured to send an address of a cache device to the user terminal by using the communications interface 73.

FIG. 8 is a schematic structural diagram of a cache device according to an embodiment of the present invention. As shown in FIG. 8, the cache device includes:
a receiving module 810, configured to receive a request data packet sent by a user terminal, where the request data packet is sent by the user terminal to a base station and is used to request target data, and the base station sends the request data packet to the cache device when the base station receives the request data packet, and when the base station determines that information about the request data packet matches information in a first data cache list or that a destination address of the request data packet is an address of the cache device; and
a sending module 820, configured to send the target data to the user terminal.

It may be understood that when the destination address of the request data packet is the address of the cache device, the request data packet is the third request data packet in the method embodiment shown in FIG. 5.

Optionally, the cache device further includes a processing module, configured to: determine whether the target data is cached; and when the target data is cached, trigger the sending module 820 to send the target data to the user terminal.

Optionally, the processing module is further configured to encapsulate the target data into a response data packet, where a source address of the response data packet is the destination address of the request data packet; and
the sending module 820 is further configured to send the response data packet to the user terminal.

Optionally, the sending module 820 is further configured to send the request data packet to the source server when the base station determines that the information about the request data packet matches the information in the first data cache list and that the target data is not cached, so that the source server sends the target data to the user terminal after the source server receives the request data packet.

Optionally, the sending module 820 is further configured to send a first request data packet to the source server when the target data is not cached, so that the source server returns the target data after the source server receives the first request data packet, where the first request data packet is used to request the target data from the source server;
the receiving module 810 is further configured to receive the target data returned by the source server; and
the sending module 820 is further configured to send the target data to the user terminal.

Optionally, the sending module 820 is further configured to send a signaling message to the base station when the target data is not cached, so that the base station sends a second request data packet to the source server after the base station receives the signaling message, where the second request data packet is used by the base station to request the target data from the source server; and the base station receives the target data returned by the source server, and sends the target data to the user terminal.

It should be noted that functions of the modules in the cache device in the embodiments of the present invention may be specifically implemented according to the method in the method embodiment shown in FIG. 2 or FIG. 5. For a specific implementation process of the functions, refer to related descriptions of the method embodiment shown in FIG. 2 or FIG. 5. Details are not described herein again.

In the embodiment shown in FIG. 8, the cache device receives the request data packet sent by the user terminal. The request data packet is sent by the user terminal to the base station and is used to request the target data. The base station sends the request data packet to the cache device when the base station receives the request data packet, and when the base station determines that the information about the request data packet matches the information in the first data cache list or that the destination address of the request data packet is the address of the cache device. In this case, the cache device sends the target data to the user terminal. Data of a source server is delivered to a cache device (a base station, a local gateway, a cache server connected to a base station by using a local gateway, or a cache server independently deployed in a mobile network) that is deployed in the mobile network and that is relatively close to a user, so that the user can directly obtain target data from the cache device. This avoids overheads on a backhaul link from a wireless network to a core network, thereby improving a response speed when a user terminal requests data, and improving user experience.

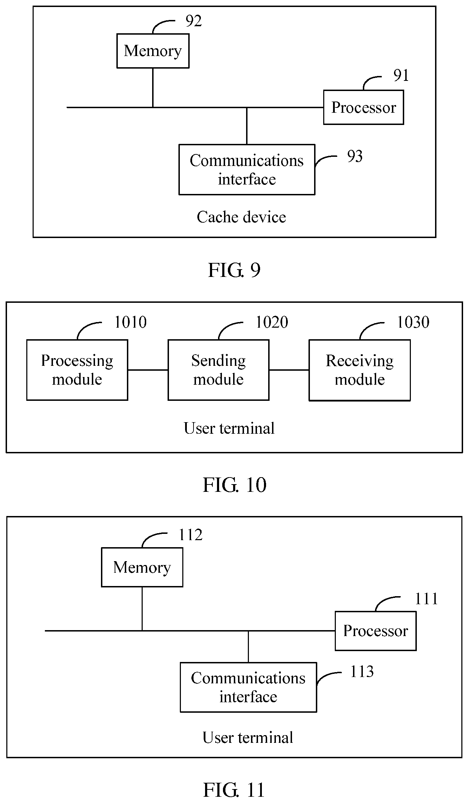

FIG. 9 is a schematic structural diagram of another cache device according to an embodiment of the present invention. As shown in FIG. 9, the cache device includes a processor 91, a memory 92, and a communications interface 93. The processor 91 is connected to the memory 92 and the communications interface 93. For example, the processor 91 may be connected to the memory 92 and the communications interface 93 by using a bus.

The processor 91 is configured to support the cache device in performing a corresponding function in the cached-data obtaining method shown in FIG. 2 or FIG. 5. The processor 91 may be a central processing unit (English: central processing unit, CPU), a network processor (English: network processor, NP), a hardware chip, or any combination thereof. The hardware chip may be an application-specific integrated circuit (English: application-specific integrated circuit, ASIC), a programmable logic device (English: programmable logic device, PLD), or a combination thereof. The PLD may be a complex programmable logic device (English: complex programmable logic device, CPLD), a field programmable gate array (English: field programmable gate array, FPGA), generic array logic (English: generic array logic, GAL), or any combination thereof.

The memory 92 is configured to store the target data, program code, and the like of the cached-data obtaining method shown in FIG. 2 or FIG. 5. The memory 92 may include a volatile memory (English: volatile memory), for example, a random access memory (English: random access memory, RAM for short). The memory 92 may also include a nonvolatile memory (English: nonvolatile memory), for example, a read-only memory (English: read-only memory, ROM for short), a flash memory (English: flash memory), a hard disk (English: hard disk drive, HDD for short), or a solid-state drive (English: solid-state drive, SSD for short). The memory 92 may further include a combination of the foregoing types of memories.

The communications interface 93 is configured to communicate with a user terminal, a source server, or the like, to receive/send the message in the foregoing method.

The processor 91 may invoke the program code to perform the following operations:
receiving, by using the communications interface 93, a request data packet sent by a user terminal, where the request data packet is sent by the user terminal to a base station and is used to request target data, and the base station sends the request data packet to the cache device when the base station receives the request data packet, and when the base station determines that information about the request data packet matches information in a first data cache list or that a destination address of the request data packet is an address of the cache device; and
sending the target data to the user terminal by using the communications interface 93.

It may be understood that when the destination address of the request data packet is the address of the cache device, the request data packet is the third request data packet in the method embodiment shown in FIG. 5.

Optionally, that the processor 91 sends the target data to the user terminal by using the communications interface 93 includes:
determining whether the target data is cached; and
when the target data is cached, sending the target data to the user terminal by using the communications interface 93.

Optionally, that the processor 91 sends the target data to the user terminal by using the communications interface 93 includes:
encapsulating the target data into a response data packet, where a source address of the response data packet is the destination address of the request data packet; and
sending the response data packet to the user terminal by using the communications interface 93.

Optionally, when the base station determines that the information about the request data packet matches the information in the first data cache list and that the target data is not cached, the processor 91 is further configured to:
send the request data packet to the source server by using the communications interface 93, so that the source server sends the target data to the user terminal after the source server receives the request data packet.

Optionally, when the target data is not cached, the processor 91 is further configured to:
send a first request data packet to the source server by using the communications interface 93, so that the source server returns the target data after the source server receives the first request data packet, where the first request data packet is used to request the target data from the source server; and
receive, by using the communications interface 93, the target data returned by the source server, and send the target data to the user terminal by using the communications interface 93.

Optionally, when the target data is not cached, the processor 91 is further configured to:
send a signaling message to the base station by using the communications interface 93, so that the base station sends a second request data packet to the source server after the base station receives the signaling message, where the second request data packet is used to request the target data from the source server; and the base station receives the target data returned by the source server, and sends the target data to the user terminal.

FIG. 10 is a schematic structural diagram of a user terminal according to an embodiment of the present invention. As shown in FIG. 10, the user terminal 1000 includes:
a processing module 1010, configured to: generate a third request data packet, where the third request data packet is used to request target data from a source server; and determine, based on a second data cache list, whether information about the third request data packet matches information in the second data cache list, where the second data cache list includes at least one piece of information and a correspondence between the information and an address of a cache device, where
the processing module 1010 is further configured to generate a fourth request data packet when the information about the third request data packet matches the information in the second data cache list, where a destination address of the fourth request data packet is an address of a cache device corresponding to matched information, and the fourth request data packet is used to request the target data from the cache device;
a sending module 1020, configured to send the fourth request data packet to the cache device, so that the cache device sends the target data to the user terminal after receiving the fourth request data packet; and
a receiving module 1030, configured to receive the target data.

Optionally, the sending module 1020 is further configured to send the third request data packet when the information about the third request data packet does not match the information in the second data cache list, so that the source server sends the target data to the user terminal after receiving the third request data packet; and
the receiving module 1030 is further configured to receive the target data.

Optionally, the processing module 1010 is further configured to:
obtain the second data cache list, where the second data cache list includes the at least one piece of information and the correspondence between the information and the address of the cache device, and the information includes a server address and/or a data identifier.

It should be noted that functions of the modules in the user terminal in the embodiments of the present invention may be specifically implemented according to the method in the method embodiment shown in FIG. 5. For a specific implementation process of the functions, refer to related descriptions of the method embodiment shown in FIG. 5. Details are not described herein again.

In the embodiment shown in FIG. 10, in this technical solution, the second data cache list is set in the user terminal. The second data cache list includes the at least one piece of information and the correspondence between the information and the address of the cache device. After the user terminal receives the third request data packet used to request the target data from the source server, the user terminal determines, based on the second data cache list, whether the information about the third request data packet matches the information in the second data cache list. If yes, it indicates that the target data is data that can be cached in the cache device. Therefore, the user terminal modifies a destination address of the third request data packet to the address of the cache device corresponding to the matched information, to generate the fourth request data packet used to request the target data from the cache device, and then sends the fourth request data packet to the cache device, so that the cache device sends the target data to the user terminal after receiving the fourth request data packet. In this case, the user terminal receives the target data. In this way, target data is obtained from a cache device (for example, a base station, a local gateway, or a cache server) that is relatively close to a user, to avoid overheads on a backhaul link from a wireless network to a core network, thereby improving a response speed when a user terminal requests data, and improving user experience.

FIG. 11 is a schematic structural diagram of another user terminal according to an embodiment of the present invention. As shown in FIG. 11, the user terminal includes a processor 111, a memory 112, and a communications interface 113. The processor 111 is connected to the memory 112 and the communications interface 113. For example, the processor 111 may be connected to the memory 112 and the communications interface 113 by using a bus.

The processor 111 is configured to support the user terminal in performing a corresponding function in the cached-data obtaining method shown in FIG. 5. The processor 111 may be a central processing unit (English: central processing unit, CPU), a network processor (English: network processor, NP), a hardware chip, or any combination thereof. The hardware chip may be an application-specific integrated circuit (English: application-specific integrated circuit, ASIC), a programmable logic device (English: programmable logic device, PLD), or a combination thereof. The PLD may be a complex programmable logic device (English: complex programmable logic device, CPLD), a field programmable gate array (English: field programmable gate array, FPGA), generic array logic (English: generic array logic, GAL), or any combination thereof.

The memory 112 is configured to store the second data cache list, program code, and the like of the cached-data obtaining method shown in FIG. 5. The memory 112 may include a volatile memory (English: volatile memory), for example, a random access memory (English: random access memory, RAM for short). The memory 112 may also include a nonvolatile memory (English: nonvolatile memory), for example, a read-only memory (English: read-only memory, ROM for short), a flash memory (English: flash memory), a hard disk (English: hard disk drive, HDD for short), or a solid-state drive (English: solid-state drive, SSD for short). The memory 112 may further include a combination of the foregoing types of memories.

The communications interface 113 is configured to communicate with a base station, a local gateway, a cache server, or a source server, to receive/send the message in the foregoing method.

The processor 111 may invoke the program code to perform the following operations:
generating a third request data packet, where the third request data packet is used to request target data from a source server;
determining, based on a second data cache list, whether information about the third request data packet matches information in the second data cache list, where the second data cache list includes at least one piece of information and a correspondence between the information and an address of a cache device;
generating a fourth request data packet when the information about the third request data packet matches the information in the second data cache list, where a destination address of the fourth request data packet is an address of a cache device corresponding to matched information, and the fourth request data packet is used to request the target data from the cache device;
sending the fourth request data packet to the cache device by using the communications interface 113, so that the cache device sends the target data to the user terminal after receiving the fourth request data packet; and
receiving the target data by using the communications interface 113.

Optionally, when the information about the third request data packet does not match the information in the second data cache list, the processor 111 is further configured to:
send the third request data packet by using the communications interface 113, so that the source server sends the target data to the user terminal after receiving the third request data packet; and
receive the target data by using the communications interface 113.

Optionally, before the processor 111 determines whether the information about the third request data packet matches the information in the second data cache list, the processor 111 is further configured to:
obtain the second data cache list by using the communications interface 113, where the second data cache list includes the at least one piece of information and the correspondence between the information and the address of the cache device, and the information includes a server address and/or a data identifier.

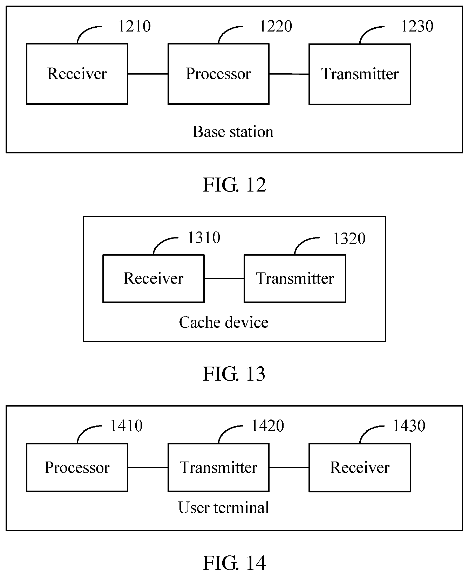

FIG. 12 is a schematic structural diagram of still another base station according to an embodiment of the present invention. As shown in FIG. 12, the base station includes:
a receiver 1210, configured to receive a request data packet sent by a user terminal, where the request data packet is used to request target data from a source server;
a processor 1220, configured to determine, based on a pre-stored first data cache list, whether information about the request data packet matches information in the first data cache list; and
a transmitter 1230, configured to send the target data to the user terminal when the information about the request data packet matches the information in the first data cache list.

Optionally, the processor 1220 is further configured to obtain the first data cache list, where the first data cache list includes at least one piece of the following information:
a server address or a data identifier.

Optionally, the transmitter 1230 is further configured to: when the information about the request data packet matches the information in the first data cache list, send the target data to the user terminal by using a first bearer established by the base station with a cache device.

Optionally, the transmitter 1230 is further configured to: when the information about the request data packet does not match the information in the first data cache list, send the target data to the user terminal by using a second bearer established by the base station with the source server.

Optionally, the processor 1220 is further configured to: determine whether the target data is cached; and when the target data is cached, trigger the transmitter to send the target data to the user terminal.

Optionally, the processor 1220 is further configured to encapsulate the target data into a response data packet, where a source address of the response data packet is a destination address of the request data packet; and
the transmitter 1220 is further configured to send the response data packet to the user terminal.

Optionally, the transmitter 1230 is further configured to send the request data packet to the source server when the target data is not cached, so that the source server sends the target data to the user terminal after the source server receives the request data packet.

Optionally, the processor 1220 is further configured to generate a first request data packet when the target data is not cached, where a source address of the first request data packet is an address of a cache device, and the first request data packet is used to request the target data from the source server; and
the transmitter 1230 is further configured to send the first request data packet to the source server, so that the source server sends the target data to the cache device after receiving the first request data packet.

Optionally, the receiver 1210 is further configured to: when the target data is not cached, receive a signaling message sent by the cache device;
the processor 1220 is further configured to generate a second request data packet based on the signaling message, where the second request data packet is used to request the target data from the source server;
the transmitter 1230 is further configured to send the second request data packet to the source server, so that the source server returns the target data after receiving the second request data packet;
the receiver 1210 is further configured to receive the target data returned by the source server; and
the transmitter 1230 is further configured to send the target data to the user terminal.

Optionally, the processor 1220 is further configured to determine whether the cache device includes the target data, where the cache device is a local gateway, the cache server connected to the base station by using the local gateway, or a cache server independently deployed in a mobile network; and
the transmitter 1230 is further configured to send a data request to the cache device when the target data is cached in the cache device, so that the cache device sends the target data to the user terminal after receiving the data request.

Optionally, the transmitter 1230 is further configured to send an address of a cache device to the user terminal.

It should be noted that functions of the receiver 1210, the processor 1220, and the transmitter 1230 in the base station in the embodiments of the present invention may be specifically implemented according to the method in the method embodiment shown in FIG. 2. For a specific implementation process of the functions, refer to related descriptions of the method embodiment shown in FIG. 2. Details are not described herein again.

FIG. 13 is a schematic structural diagram of still another cache device according to an embodiment of the present invention. As shown in FIG. 13, the cache device includes:
a receiver 1310, configured to receive a request data packet sent by a user terminal, where the request data packet is sent by the user terminal to a base station and is used to request target data, and the base station sends the request data packet to the cache device when the base station receives the request data packet, and when the base station determines that information about the request data packet matches information in a first data cache list or that a destination address of the request data packet is an address of the cache device; and
a transmitter 1320, configured to send the target data to the user terminal.

It may be understood that when the destination address of the request data packet is the address of the cache device, the request data packet is the third request data packet in the method embodiment shown in FIG. 5.

Optionally, the cache device further includes:
a processor, configured to: determine whether the target data is cached; and when the target data is cached, trigger the transmitter to send the target data to the user terminal.

Optionally, the processor is further configured to encapsulate the target data into a response data packet, where a source address of the response data packet is the destination address of the request data packet; and
the transmitter 1320 is further configured to send the response data packet to the user terminal.

Optionally, the transmitter 1320 is further configured to:
send the request data packet to the source server when the base station determines that the information about the request data packet matches the information in the first data cache list and that the target data is not cached, so that the source server sends the target data to the user terminal after the source server receives the request data packet.

Optionally, the transmitter 1320 is further configured to send a first request data packet to the source server when the target data is not cached, so that the source server returns the target data after the source server receives the first request data packet, where the first request data packet is used to request the target data from the source server;
the receiver 1310 is further configured to receive the target data returned by the source server; and
the transmitter 1320 is further configured to send the target data to the user terminal.

Optionally, the transmitter 1320 is further configured to send a signaling message to the base station when the target data is not cached, so that the base station sends a second request data packet to the source server after the base station receives the signaling message, where the second request data packet is used by the base station to request the target data from the source server; and the base station receives the target data returned by the source server, and sends the target data to the user terminal.

It should be noted that functions of the receiver 1310, the transmitter 1320, and a processor in the cache device in the embodiments of the present invention may be specifically implemented according to the method in the method embodiment shown in FIG. 2 or FIG. 5. For a specific implementation process of the functions, refer to related descriptions of the method embodiment shown in FIG. 2 or FIG. 5. Details are not described herein again.

FIG. 14 is a schematic structural diagram of still another user terminal according to an embodiment of the present invention. As shown in FIG. 14, the user terminal includes:
a processor 1410, configured to: generate a third request data packet, where the third request data packet is used to request target data from a source server; and determine, based on a second data cache list, whether information about the third request data packet matches information in the second data cache list, where the second data cache list includes at least one piece of information and a correspondence between the information and an address of a cache device, where
the processor 1410 is further configured to generate a fourth request data packet when the information about the third request data packet matches the information in the second data cache list, where a destination address of the fourth request data packet is an address of a cache device corresponding to matched information, and the fourth request data packet is used to request the target data from the cache device;
a transmitter 1420, configured to send the fourth request data packet to the cache device, so that the cache device sends the target data to the user terminal after receiving the fourth request data packet; and
a receiver 1430, configured to receive the target data.

Optionally, the transmitter 1420 is further configured to send the third request data packet when the information about the third request data packet does not match the information in the second data cache list, so that the source server sends the target data to the user terminal after receiving the third request data packet; and
the receiver 1430 is further configured to receive the target data.

Optionally, the processor 1410 is further configured to:
obtain the second data cache list, where the second data cache list includes the at least one piece of information and the correspondence between the information and the address of the cache device, and the information includes a server address and/or a data identifier.

It should be noted that functions of the processor 1410, the transmitter 1420, and the receiver 1430 in the user terminal in the embodiments of the present invention may be specifically implemented according to the method in the method embodiment shown in FIG. 5. For a specific implementation process of the functions, refer to related descriptions of the method embodiment shown in FIG. 5. Details are not described herein again.

It should be noted that, for brief description, the foregoing method embodiments each are represented as a series of actions. However, a person skilled in the art should appreciate that the present invention is not limited to the described order of the actions, because some steps may be performed in other orders or simultaneously according to the present invention. In addition, a person skilled in the art should also appreciate that all the embodiments described in this specification are example embodiments, and the related actions and modules are not necessarily mandatory to the present invention.

In the foregoing embodiments, descriptions of the embodiments have respective focuses. For a part that is not described in detail in an embodiment, refer to related descriptions in other embodiments.

A person of ordinary skill in the art may understand that all or some of the steps of the methods in the foregoing embodiments may be implemented by a program instructing related hardware. The program may be stored in a computer readable storage medium. The storage medium may include a flash memory, a read-only memory (Read-Only Memory, ROM), a random access memory (Random Access Memory, RAM), a magnetic disk, an optical disk, or the like.

The content downloading method, the related device, and the system that are provided in the embodiments of the present invention are described in detail above. The principle and implementations of the present invention are described in this specification by using specific examples. The foregoing descriptions of the embodiments are merely used to help understand the method and core ideas of the present invention. In addition, a person of ordinary skill in the art can make modifications to the present invention in terms of the specific implementations and application scopes according to the ideas of the present invention. In conclusion, the content of this specification shall not be construed as a limitation on the present invention.

## Claims

1. A cached-data obtaining method, comprising:
receiving, by a base station, a request data packet sent by a user terminal, wherein the request data packet is used to request target data from a source server;
determining, by the base station based on a first data cache list, whether information about the request data packet matches information in the first data cache list; and
sending, by the base station, the target data to the user terminal when the information about the request data packet matches the information in the first data cache list.

2. The method according to claim 1, wherein before the determining, by the base station based on a first data cache list, whether information about the request data packet matches information in the first data cache list, the method further comprises:
obtaining, by the base station, the first data cache list, wherein the first data cache list comprises at least one piece of the following information:
a server address or a data identifier.

3. The method according to claim 1, wherein the sending, by the base station, the target data to the user terminal comprises: sending, by the base station, the target data to the user terminal by using a first bearer established by the base station with a cache device.

4. The method according to claim 1, wherein the method further comprises:
when the information about the request data packet does not match the information in the first data cache list, sending, by the base station, the target data to the user terminal by using a second bearer established by the base station with the source server.

5. The method according to claim 1, wherein before the sending the target data to the user terminal, the method further comprises:
determining, by the base station, whether the target data is cached; and
when the target data is cached, performing the step of sending, by the base station, the target data to the user terminal.

6. The method according to any one of claims 1 to 5, wherein the sending, by the base station, the target data to the user terminal comprises:
encapsulating, by the base station, the target data into a response data packet, wherein a source address of the response data packet is a destination address of the request data packet; and
sending, by the base station, the response data packet to the user terminal.

7. The method according to claim 5, wherein when the target data is not cached, the method further comprises:
sending, by the base station, the request data packet to the source server, so that the source server sends the target data to the user terminal after the source server receives the request data packet.

8. The method according to claim 5, wherein when the target data is not cached, the method further comprises:
generating, by the base station, a first request data packet, wherein a source address of the first request data packet is an address of a cache device, and the first request data packet is used to request the target data from the source server; and
sending, by the base station, the first request data packet to the source server, so that the source server sends the target data to the cache device after receiving the first request data packet.

9. The method according to claim 5, wherein when the target data is not cached, the method further comprises:
receiving, by the base station, a signaling message sent by the cache device;
generating, by the base station, a second request data packet based on the signaling message, wherein the second request data packet is used to request the target data from the source server;
sending, by the base station, the second request data packet to the source server, so that the source server returns the target data after receiving the second request data packet; and
receiving, by the base station, the target data returned by the source server, and sending the target data to the user terminal.

10. The method according to claim 5, wherein the determining whether the target data is cached comprises:
determining, by the base station, whether the target data is cached in a cache device, wherein the cache device is a local gateway, a cache server connected to the base station by using a local gateway, or a cache server independently deployed in a mobile network; and
when the target data is cached in the cache device, the sending, by the base station, the target data to the user terminal comprises:
sending, by the base station, a data request to the cache device, so that the cache device sends the target data to the user terminal after receiving the data request.

11. The method according to claim 1, wherein the method further comprises:
sending, by the base station, an address of a cache device to the user terminal.

12. A cached-data obtaining method, comprising:
receiving, by a cache device, a request data packet sent by a user terminal, wherein the request data packet is sent by the user terminal to a base station and is used to request target data, and the base station sends the request data packet to the cache device when the base station receives the request data packet, and when the base station determines that information about the request data packet matches information in a first data cache list or that a destination address of the request data packet is an address of the cache device; and
sending, by the cache device, the target data to the user terminal.

13. The method according to claim 12, wherein the sending, by the cache device, the target data to the user terminal comprises:
determining, by the cache device, whether the target data is cached; and
sending, by the cache device, the target data to the user terminal when the target data is cached.

14. The method according to claim 12 or 13, wherein the sending, by the cache device, the target data to the user terminal comprises:
encapsulating, by the cache device, the target data into a response data packet, wherein a source address of the response data packet is the destination address of the request data packet; and
sending, by the cache device, the response data packet to the user terminal.

15. The method according to claim 13, wherein when the base station determines that the information about the request data packet matches the information in the first data cache list and that the target data is not cached, the method further comprises:
sending, by the cache device, the request data packet to the source server, so that the source server sends the target data to the user terminal after the source server receives the request data packet.

16. The method according to claim 13, wherein when the target data is not cached, the method further comprises:
sending, by the cache device, a first request data packet to the source server, so that the source server returns the target data after the source server receives the first request data packet, wherein the first request data packet is used to request the target data from the source server; and
receiving, by the cache device, the target data returned by the source server, and sending the target data to the user terminal.

17. The method according to claim 13, wherein when the target data is not cached, the method further comprises:
sending, by the cache device, a signaling message to the base station, so that the base station sends a second request data packet to the source server after the base station receives the signaling message, wherein the second request data packet is used to request the target data from the source server; and the base station receives the target data returned by the source server, and sends the target data to the user terminal.

18. A cached-data obtaining method, comprising:
generating, by a user terminal, a third request data packet, wherein the third request data packet is used to request target data from a source server;
determining, by the user terminal based on a second data cache list, whether information about the third request data packet matches information in the second data cache list, wherein the second data cache list comprises at least one piece of information and a correspondence between the information and an address of a cache device;
generating, by the user terminal, a fourth request data packet when the information about the third request data packet matches the information in the second data cache list, wherein a destination address of the fourth request data packet is an address of a cache device corresponding to matched information, and the fourth request data packet is used to request the target data from the cache device;
sending, by the user terminal, the fourth request data packet to the cache device, so that the cache device sends the target data to the user terminal after receiving the fourth request data packet; and
receiving, by the user terminal, the target data.

19. The method according to claim 18, wherein when the information about the third request data packet does not match the information in the second data cache list, the method further comprises:
sending, by the user terminal, the third request data packet, so that the source server sends the target data to the user terminal after receiving the third request data packet; and
receiving, by the user terminal, the target data.

20. The method according to claim 18, wherein before the determining whether information about the third request data packet matches information in the second data cache list, the method further comprises:
obtaining, by the user terminal, the second data cache list, wherein the second data cache list comprises the at least one piece of information and the correspondence between the information and the address of the cache device, and the information comprises a server address and/or a data identifier.

21. Abase station, comprising:
a receiving module, configured to receive a request data packet sent by a user terminal, wherein the request data packet is used to request target data from a source server;
a processing module, configured to determine, based on a pre-stored first data cache list, whether information about the request data packet matches information in the first data cache list; and
a sending module, configured to send the target data to the user terminal when the information about the request data packet matches the information in the first data cache list.

22. The base station according to claim 21, wherein
the processing module is further configured to obtain the first data cache list, wherein the first data cache list comprises at least one piece of the following information:
a server address or a data identifier.

23. The base station according to claim 21, wherein the sending module is further configured to send the target data to the user terminal by using a first bearer established by the base station with a cache device.

24. The base station according to claim 21, wherein the sending module is further configured to: when the information about the request data packet does not match the information in the first data cache list, send the target data to the user terminal by using a second bearer established by the base station with the source server.

25. The base station according to claim 21, wherein
the processing module is further configured to: determine whether the target data is cached; and when the target data is cached, trigger the sending module to send the target data to the user terminal.

26. The base station according to any one of claims 21 to 25, wherein
the processing module is further configured to encapsulate the target data into a response data packet, wherein a source address of the response data packet is a destination address of the request data packet; and
the sending module is further configured to send the response data packet to the user terminal.

27. The base station according to claim 25, wherein the sending module is further configured to send the request data packet to the source server when the target data is not cached, so that the source server sends the target data to the user terminal after the source server receives the request data packet.

28. The base station according to claim 25, wherein
the processing module is further configured to generate a first request data packet when the target data is not cached, wherein a source address of the first request data packet is an address of a cache device, and the first request data packet is used to request the target data from the source server; and
the sending module is further configured to send the first request data packet to the source server, so that the source server sends the target data to the cache device after receiving the first request data packet.

29. The base station according to claim 25, wherein
the receiving module is further configured to: when the target data is not cached, receive a signaling message sent by the cache device;
the processing module is further configured to generate a second request data packet based on the signaling message, wherein the second request data packet is used to request the target data from the source server;
the sending module is further configured to send the second request data packet to the source server, so that the source server returns the target data after receiving the second request data packet;
the receiving module is further configured to receive the target data returned by the source server; and
the sending module is further configured to send the target data to the user terminal.

30. The base station according to claim 25, wherein
the processing module is further configured to determine whether the cache device comprises the target data, wherein the cache device is a local gateway, the cache server connected to the base station by using the local gateway, or a cache server independently deployed in a mobile network; and
the sending module is further configured to send a data request to the cache device when the target data is cached in the cache device, so that the cache device sends the target data to the user terminal after receiving the data request.

31. The base station according to claim 21, wherein
the sending module is further configured to send an address of a cache device to the user terminal.

32. A cache device, comprising:
a receiving module, configured to receive a request data packet sent by a user terminal, wherein the request data packet is sent by the user terminal to a base station and is used to request target data, and the base station sends the request data packet to the cache device when the base station receives the request data packet, and when the base station determines that information about the request data packet matches information in a first data cache list or that a destination address of the request data packet is an address of the cache device; and
a sending module, configured to send the target data to the user terminal.

33. The cache device according to claim 32, wherein the cache device further comprises:
a processing module, configured to: determine whether the target data is cached;
and when the target data is cached, trigger the sending module to send the target data to the user terminal.

34. The cache device according to claim 32 or 33, wherein
the processing module is further configured to encapsulate the target data into a response data packet, wherein a source address of the response data packet is the destination address of the request data packet; and
the sending module is further configured to send the response data packet to the user terminal.

35. The cache device according to claim 33, wherein the sending module is further configured to:
send the request data packet to the source server when the base station determines that the information about the request data packet matches the information in the first data cache list and that the target data is not cached, so that the source server sends the target data to the user terminal after the source server receives the request data packet.

36. The cache device according to claim 33, wherein
the sending module is further configured to send a first request data packet to the source server when the target data is not cached, so that the source server returns the target data after the source server receives the first request data packet, wherein the first request data packet is used to request the target data from the source server;
the receiving module is further configured to receive the target data returned by the source server; and
the sending module is further configured to send the target data to the user terminal.

37. The cache device according to claim 33, wherein the sending module is further configured to send a signaling message to the base station when the target data is not cached, so that the base station sends a second request data packet to the source server after the base station receives the signaling message, wherein the second request data packet is used by the base station to request the target data from the source server; and the base station receives the target data returned by the source server, and sends the target data to the user terminal.

38. A user terminal, comprising:
a processing module, configured to: generate a third request data packet, wherein the third request data packet is used to request target data from a source server; and determine, based on a second data cache list, whether information about the third request data packet matches information in the second data cache list, wherein the second data cache list comprises at least one piece of information and a correspondence between the information and an address of a cache device, wherein
the processing module is further configured to generate a fourth request data packet when the information about the third request data packet matches the information in the second data cache list, wherein a destination address of the fourth request data packet is an address of a cache device corresponding to matched information, and the fourth request data packet is used to request the target data from the cache device;
a sending module, configured to send the fourth request data packet to the cache device, so that the cache device sends the target data to the user terminal after receiving the fourth request data packet; and
a receiving module, configured to receive the target data.

39. The user terminal according to claim 38, wherein
the sending module is further configured to send the third request data packet when the information about the third request data packet does not match the information in the second data cache list, so that the source server sends the target data to the user terminal after receiving the third request data packet; and
the receiving module is further configured to receive the target data.

40. The user terminal according to claim 38, wherein the processing module is further configured to:
obtain the second data cache list, wherein the second data cache list comprises the at least one piece of information and the correspondence between the information and the address of the cache device, and the information comprises a server address and/or a data identifier.

41. Abase station, comprising:
a receiver, configured to receive a request data packet sent by a user terminal, wherein the request data packet is used to request target data from a source server;
a processor, configured to determine, based on a pre-stored first data cache list, whether information about the request data packet matches information in the first data cache list; and
a transmitter, configured to send the target data to the user terminal when the information about the request data packet matches the information in the first data cache list.

42. The base station according to claim 41, wherein
the processor is further configured to obtain the first data cache list, wherein the first data cache list comprises at least one piece of the following information:
a server address or a data identifier.

43. The base station according to claim 41, wherein the transmitter is further configured to:
when the information about the request data packet matches the information in the first data cache list, send the target data to the user terminal by using a first bearer established by the base station with a cache device.

44. The base station according to claim 41, wherein the transmitter is further configured to:
when the information about the request data packet does not match the information in the first data cache list, send the target data to the user terminal by using a second bearer established by the base station with the source server.

45. The base station according to claim 41, wherein
the processor is further configured to: determine whether the target data is cached; and when the target data is cached, trigger the transmitter to send the target data to the user terminal.

46. The base station according to any one of claims 41 to 45, wherein
the processor is further configured to encapsulate the target data into a response data packet, wherein a source address of the response data packet is a destination address of the request data packet; and
the transmitter is further configured to send the response data packet to the user terminal.

47. The base station according to claim 45, wherein the transmitter is further configured to send the request data packet to the source server when the target data is not cached, so that the source server sends the target data to the user terminal after the source server receives the request data packet.

48. The base station according to claim 45, wherein
the processor is further configured to generate a first request data packet when the target data is not cached, wherein a source address of the first request data packet is an address of a cache device, and the first request data packet is used to request the target data from the source server; and
the transmitter is further configured to send the first request data packet to the source server, so that the source server sends the target data to the cache device after receiving the first request data packet.

49. The base station according to claim 45, wherein
the receiver is further configured to: when the target data is not cached, receive a signaling message sent by the cache device;
the processor is further configured to generate a second request data packet based on the signaling message, wherein the second request data packet is used to request the target data from the source server;
the transmitter is further configured to send the second request data packet to the source server, so that the source server returns the target data after receiving the second request data packet;
the receiver is further configured to receive the target data returned by the source server; and
the transmitter is further configured to send the target data to the user terminal.

50. The base station according to claim 45, wherein
the processor is further configured to determine whether the cache device comprises the target data, wherein the cache device is a local gateway, the cache server connected to the base station by using the local gateway, or a cache server independently deployed in a mobile network; and
the transmitter is further configured to send a data request to the cache device when the target data is cached in the cache device, so that the cache device sends the target data to the user terminal after receiving the data request.

51. The base station according to claim 41, wherein
the transmitter is further configured to send an address of a cache device to the user terminal.

52. A cache device, comprising:
a receiver, configured to receive a request data packet sent by a user terminal, wherein the request data packet is sent by the user terminal to a base station and is used to request target data, and the base station sends the request data packet to the cache device when the base station receives the request data packet, and when the base station determines that information about the request data packet matches information in a first data cache list or that a destination address of the request data packet is an address of the cache device; and
a transmitter, configured to send the target data to the user terminal.

53. The cache device according to claim 52, wherein the cache device further comprises:
a processor, configured to: determine whether the target data is cached; and when the target data is cached, trigger the transmitter to send the target data to the user terminal.

54. The cache device according to claim 52 or 53, wherein
the processor is further configured to encapsulate the target data into a response data packet, wherein a source address of the response data packet is the destination address of the request data packet; and
the transmitter is further configured to send the response data packet to the user terminal.

55. The cache device according to claim 53, wherein the transmitter is further configured to:
send the request data packet to the source server when the base station determines that the information about the request data packet matches the information in the first data cache list and that the target data is not cached, so that the source server sends the target data to the user terminal after the source server receives the request data packet.

56. The cache device according to claim 53, wherein
the transmitter is further configured to send a first request data packet to the source server when the target data is not cached, so that the source server returns the target data after the source server receives the first request data packet, wherein the first request data packet is used to request the target data from the source server;
the receiver is further configured to receive the target data returned by the source server; and
the transmitter is further configured to send the target data to the user terminal.

57. The cache device according to claim 53, wherein the transmitter is further configured to send a signaling message to the base station when the target data is not cached, so that the base station sends a second request data packet to the source server after the base station receives the signaling message, wherein the second request data packet is used by the base station to request the target data from the source server; and the base station receives the target data returned by the source server, and sends the target data to the user terminal.

58. A user terminal, comprising:
a processor, configured to: generate a third request data packet, wherein the third request data packet is used to request target data from a source server; and determine, based on a second data cache list, whether information about the third request data packet matches information in the second data cache list, wherein the second data cache list comprises at least one piece of information and a correspondence between the information and an address of a cache device, wherein
the processor is further configured to generate a fourth request data packet when the information about the third request data packet matches the information in the second data cache list, wherein a destination address of the fourth request data packet is an address of a cache device corresponding to matched information, and the fourth request data packet is used to request the target data from the cache device;
a transmitter, configured to send the fourth request data packet to the cache device, so that the cache device sends the target data to the user terminal after receiving the fourth request data packet; and
a receiver, configured to receive the target data.

59. The user terminal according to claim 58, wherein
the transmitter is further configured to send the third request data packet when the information about the third request data packet does not match the information in the second data cache list, so that the source server sends the target data to the user terminal after receiving the third request data packet; and
the receiver is further configured to receive the target data.

60. The user terminal according to claim 58, wherein the processor is further configured to:
obtain the second data cache list, wherein the second data cache list comprises the at least one piece of information and the correspondence between the information and the address of the cache device, and the information comprises a server address and/or a data identifier.

61. A communications system, comprising a user terminal, a base station, and a cache device, wherein
the user terminal is configured to send a request data packet, wherein the request data packet is used to request target data from a source server;
the base station is configured to: receive the request data packet sent by the user terminal; determine, based on a first data cache list, whether information about the request data packet matches information in the first data cache list; and if yes, send the target data to the user terminal; and
the cache device is configured to store the target data.

62. The communications system according to claim 61, wherein the base station comprises any base station according to claims 21 to 31 or claims 41 to 51, and the cache device comprises any cache device according to claims 32 to 37 or claims 52 to 57.

63. A communications system, comprising a user terminal and a cache device, wherein
the user terminal is configured to: generate a third request data packet, wherein the third request data packet is used to request target data from a source server; determine, based on a second data cache list, whether information about the third request data packet matches information in the second data cache list; if yes, generate a fourth request data packet, wherein the second data cache list comprises at least one piece of information and a correspondence between the information and an address of a cache device, a destination address of the fourth request data packet is an address of a cache device corresponding to matched information, and the fourth request data packet is used to request the target data from the cache device; and send the fourth request data packet to the cache device;
the cache device is configured to: receive the fourth request data packet, and send the target data to the user terminal; and
the user terminal is further configured to receive the target data.

64. The communications system according to claim 63, wherein the user terminal comprises any user terminal according to claims 38 to 40 or claims 58 to 60, and the cache device comprises any cache device according to claims 32 to 34, claim 36, claim 37, claims 52 to 54, claim 56, or claim 57.
